(19) Europäisches Patentamt
European Patent Office
Office européen des brevets

(11) **EP 2 710 722 B1**

(12) **EUROPÄISCHE PATENTSCHRIFT**

(45) Veröffentlichungstag und Bekanntmachung des Hinweises auf die Patenterteilung:
**13.09.2017 Patentblatt 2017/37**

(21) Anmeldenummer: **12735149.2**

(22) Anmeldetag: **16.07.2012**

(51) Int Cl.:
*H02M 5/293* (2006.01)   *H02M 5/22* (2006.01)
*H02M 7/483* (2007.01)

(86) Internationale Anmeldenummer:
**PCT/EP2012/063878**

(87) Internationale Veröffentlichungsnummer:
**WO 2013/007836 (17.01.2013 Gazette 2013/03)**

(54) **VERFAHREN ZUR STEUERUNG EINES DIREKTUMRICHTERS, ELEKTRONISCHE STEUERUNGSEINRICHTUNG DAFÜR, DIREKTUMRICHTER UND COMPUTERPROGRAMM**

METHOD FOR CONTROLLING A AC-AC CONVERTER, CONTROL DEVICE AND COMPUTER PROGRAM

PROCÉDÉ DE COMMANDE D'UN CONVERTISSEUR DIRECT DE COURANT ALTERNATIF, DISPOSITIF DE COMMANDE ÉLECTRONIQUE ASSOCIÉ, CONVERTISSEUR DIRECT DE COURANT ALTERNATIF ET PROGRAMME INFORMATIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.07.2011 DE 102011107737**

(43) Veröffentlichungstag der Anmeldung:
**26.03.2014 Patentblatt 2014/13**

(73) Patentinhaber: **Siemens Aktiengesellschaft 80333 München (DE)**

(72) Erfinder: **BARUSCHKA, Lennart 30900 Wedemark (DE)**

(56) Entgegenhaltungen:
**WO-A2-2011/120679   DE-A1- 10 103 031 US-A1- 2008 055 947**

- JUN WEN ET AL: "Synthesis of Multilevel Converters Based on Singleand/or Three-Phase Converter Building Blocks", IEEE TRANSACTIONS ON POWER ELECTRONICS, IEEE SERVICE CENTER, PISCATAWAY, NJ, US, Bd. 23, Nr. 3, 1. Mai 2008 (2008-05-01), Seiten 1247-1256, XP011207414, ISSN: 0885-8993
- HAGIWARA M ET AL: "PWM control and experiment of modular multilevel converters", POWER ELECTRONICS SPECIALISTS CONFERENCE, 2008. PESC 2008. IEEE, IEEE, PISCATAWAY, NJ, USA, 15. Juni 2008 (2008-06-15), Seiten 154-161, XP031299968, ISBN: 978-1-4244-1667-7
- GLINKA M ET AL: "A new ac/ac-multilevel converter family applied to a single-phase converter", POWER ELECTRONICS AND DRIVE SYSTEMS, 2003. PEDS 2003. THE FIFTH INTERNATIONAL CONFERENCE ON SINGAPORE 17-20 NOV. 2003, PISCATAWAY, NJ, USA,IEEE, PISCATAWAY, NJ, USA, Bd. 1, 17. November 2003 (2003-11-17), Seiten 16-23, XP010694784, DOI: 10.1109/PEDS.2003.1282669 ISBN: 978-0-7803-7885-8
- L BARUSCHKA ET AL: "A new 3-phase direct modular multilevel converter", PROCEEDINGS OF THE 2011-14TH EUROPEAN CONFERENCE ON POWER ELECTRONICS AND APPLICATIONS (EPE 2011), 30. August 2011 (2011-08-30), Seiten 1-10, XP055085054, ISBN: 978-1-61-284167-0

**Beschreibung**

Die Erfindung betrifft ein Verfahren zur Steuerung eines Direktumrichters, der zur Verbindung eines ersten Dreileitungsnetzes mit einem zweiten Dreileitungsnetz eingerichtet ist. Der Direktumrichter weist sechs in Reihe geschaltete Umrichterzweige mit Energiespeichern auf, gemäß den weiteren Merkmalen des Oberbegriffs des Anspruchs 1. Die Erfindung betrifft ferner eine elektronische Steuerungseinrichtung für einen solchen Direktumrichter gemäß Anspruch 13, einen Direktumrichter gemäß Anspruch 14 sowie Computerprogramme gemäß den Ansprüchen 15 und 16.

Allgemein betrifft die Erfindung die Steuerung eines Direktumrichters in sogenannter Hexverter-Ausführung, d.h. in einer Ausführung, in der sechs Umrichterzweige in Reihe geschaltet sind und die insgesamt sechs Leitungen des ersten und des zweiten Dreileitungsnetzes jeweils an die Verbindungspunkte zwischen zwei Umrichterzweigen geschaltet sind. Eine solche Ausführung eines modularen Direktumrichters wurde bereits in der nicht vorveröffentlichten Anmeldung DE 10 2010 013 862 vorgeschlagen. Ein solcher Hexverter hat den Vorteil, dass im Vergleich zu herkömmlichen Matrix-Anordnungen aus neun Umrichterzweigen die erforderliche Modulanzahl und damit der HardwareAufwand um ein Drittel gesenkt werden kann, ohne dass es zu Einbußen an der Leistungsfähigkeit kommt. Gegenüber Back-to-back-Anordnungen (M²LC-Topologie) mit 12 Umrichterzweigen kann die Modulanzahl sogar halbiert werden.

Die einzelnen Umrichterzweige können dabei, zum Teil oder vollständig, elektrische Energiespeicher aufweisen, z.B. in Form von Kondensatoren oder aufladbaren Batterien (Akkumulatoren). Ein Umrichterzweig kann dabei z.B. aus einem einzigen sogenannten Brückenmodul ausgebildet sein, wie nachfolgend anhand von Ausführungsbeispielen noch näher erläutert. Vorteilhaft sind auch Reihenschaltungen von solchen Brückenmodulen, um einen Umrichterzweig zu bilden, da Vorteile hinsichtlich der Regelungsmöglichkeiten, Redundanz und des Oberschwingungsgehalts der Ausgangsspannungen und Ströme erzielt werden. Der Begriff "Umrichterzweig" erfasst daher ein einzelnes Brückenmodul oder eine Reihenschaltung von mehreren Brückenmodulen.

Der erläuterte Direktumrichter in Form eines Hexverters ist neuartig, so dass ein Wunsch nach einer möglichst effizienten Steuerung des Hexverters besteht. Bekannte Verfahren zur Steuerung von Direktumrichtern sind auf andere Schaltungstopologien optimiert.

Aus der Veröffentlichung "A new AC/AC Converter Familiy Applied to a Single-Phase Converter" von M. Glinka und R. Marquardt, The 5th international Conference on Power Electronics and Drive Systems, Singapur 2003, Bd. 1, Seiten 16-23, ist ein modularer Multilevel Converter (M²LC) bekannt. Das neue Konzept fällt dabei durch seine Modularität und seiner extrem guten Regelcharakteristik auf. Diese stringente Modularität resultiert in einer sehr kosteneffizienten und vielseitigen Stromrichterkonstruktion. Das neue M²LC Konzept ist auf einen weiten Bereich von mehrphasigen AC/AC Converter anpassbar. Es wird dabei gezeigt, dass dieses Umrichterkonzept vorteilhaft ist für zukünftige AC-gespeiste Fahrzeuge und dass dieses deren Anforderungen sehr gut erfüllt.

Aus der Veröffentlichung "Synthesis of Multilevel Converters Based on Single- and/or Three-Phase Converter Building Blocks" von J. Wen und K. Ma Smedley, IEEE Transactions on Power Electronics, Mai 2008, IEEE Service Center, Piscataway, NJ, US, Bd. 23, Nr. 3, Seiten 1247-1256 (XP011207414), sind eine Familie von Multilevel Converter bekannt, die durch die Verwendung einer Vielzahl von bereits entwickelten einphasigen und/oder dreiphasigen Blöcken gebildet werden. Die dadurch entstehenden Vorteile beinhalten eine modulare Struktur, die zu einer günstige Konstruktion und Wartun sowie eine einfache Erweiterbarkeit bis hin zu hohen Spannungsniveaus. Die Veröffentlichung zeigt einen Hexagram converter, der aus sechs miteinander verbundenen dreiphasen Stromrichtermodulen aufgebaut ist. Aus der nicht vorveröffentlichten EP 2 553 799 A0 (WO2011/120679) ist ein transformatorloser Direktumrichter zur Verbindung von zwei Dreileitungsnetzen bekannt.

Der Erfindung liegt daher die Aufgabe zugrunde, ein Verfahren zur Steuerung eines Direktumrichters in Form des erläuterten Hexverters anzugeben, das einen möglichst effizienten Langzeitbetrieb des Direktumrichters erlaubt. Ferner soll eine geeignete Steuerungseinrichtung und ein Direktumrichter angegeben werden sowie Computerprogramme zur Ausführung des Verfahrens.

Die Aufgabe wird gelöst durch ein Verfahren zur Steuerung eines Direktumrichters, der zur Verbindung eines ersten Dreileitungsnetzes mit einem zweiten Dreileitungsnetz eingerichtet ist, wobei der Direktumrichter sechs in Reihe geschaltete Umrichterzweige aufweist, in denen elektrische Energiespeicher vorgesehen sind, wobei das Verfahren ein Verfahren zur Umrichterbetriebssteuerung aufweist, mit dem der Energietransfer von dem ersten Dreileitungsnetz in das zweite Dreileitungsnetz oder umgekehrt nach Energiebedarfs-. Energieangebots- und/oder Blindleistungskriterien gesteuert wird, wobei das Verfahren ein Verfahren zur Energieinhaltsregelung aufweist, mit dem die in jedem Umrichterzweig gespeicherte jeweilige elektrische Energiemenge oder eine die elektrische Energiemenge kennzeichnende elektrische Größe auf einen vorgegebenen Sollbereich geregelt wird.

Die Erfindung hat den Vorteil, dass der Energieinhalt in den einzelnen Umrichterzweigen zeitlich vergleichmäßigt wird und damit geglättet wird. Dies erlaubt einen effizienten Langzeitbetrieb des Umrichtersystems. Es werden damit sowohl leer laufende Energiespeicher als auch Überspannungen bei bereits vollen Energiespeichern vermieden. Durch die Vermeidung von Überspannungen können die Bauteile geschont bzw. deren Zerstörung verhindert werden. Durch die Vermeidung des Leerlaufens wird eine permanente Regelbereitschaft der einzelnen Brückenmodule in jedem Umrichterzweig zu jedem Zeitpunkt gewährleistet, so dass der Direktumrichter zu jedem Zeitpunkt die gewünschten Ausgangsspannungen und -ströme bereitstellen kann.

Die Erfindung eignet sich z.B. für die Anbindung großer Windkraftanlagen mit mehr als 10 MW an ein Energieversorgungsnetz.

Ein weiterer Vorteil der Erfindung ist, dass für die Vergleichmäßigung des E-nergieinhaltes in den Energiespeichern keine zusätzlichen Hardware-Elemente erforderlich sind. Das Verfahren kann z.B. durch Erweiterung der Steuerungssoftware eines vorhandenen Umrichter-Steuerungsmoduls realisiert werden.

Das erste und/oder das zweite Dreileitungsnetz kann z.B. ein Drehstromnetz sein. Gemäß einer vorteilhaften Weiterbildung der Erfindung ist das erste Dreileitungsnetz das speisende Netz und das zweite Dreileitungsnetz das energieverbrauchende Netz, an dem die Energieverbraucher angeschlossen werden können.

Gemäß einer vorteilhaften Weiterbildung der Erfindung steuert das Verfahren zur Energieinhaltsregelung die vom Direktumrichter in dem ersten Dreileitungsnetz und/oder in dem zweiten Dreileitungsnetz erzeugte Blindleistung. Es hat sich gezeigt, dass durch solch eine Blindleistungs-Steuerung auf regelungstechnisch einfache Weise eine zuverlässige Vergleichmäßigung des Energieinhalts in den Energiespeichern der Umrichterzweige zuverlässig realisiert werden kann. Gemäß einer vorteilhaften Weiterbildung wird dabei die Blindleistung derart gesteuert, dass die an das erste Dreileitungsnetz abgegebene Blindleistung der an das zweite Dreileitungsnetz abgegebenen Blindleistung entspricht. Die jeweils an das erste bzw. das zweite Dreileitungsnetz von dem Direktumrichter abgegebene Blindleistung wird dabei durch Steuerung der Brückenmodule in den einzelnen Umrichterzweigen gesteuert. Die Steuerung der Blindleistung auf identische Werte in beiden Dreileitungsnetzen hat den Vorteil, dass die zwischen jeweils zwei benachbarten Umrichterzweigen auftretende Energieverschiebung minimiert werden kann.

Gemäß einer vorteilhaften Weiterbildung der Erfindung steuert das Verfahren zur Energieinhaltsregelung einen Kreisstrom, der durch die gesamte Reihenschaltung der sechs Umrichterzweige kreisförmig fließt, und/oder eine Sternpunktdifferenzspannung, die zwischen den Sternpunkten des ersten und des zweiten Dreileitungsnetzes auftritt. Dies hat den Vorteil, dass die erfindungsgemäße Vergleichmäßigung der Energiemenge in den Energiespeichern auch in Anwendungsfällen realisiert werden kann, in denen die Blindleistungsteuerung in den Dreileitungsnetzen nicht praktikabel ist, weil die Blindleistungen aufgrund äußerer Bedingungen vorgegeben sind oder nicht beliebig verändert werden können. Mit Vorteil können dabei die besonderen Eigenschaften des Hexverters genutzt werden, der eine grundsätzliche freie Einstellung des Kreisstroms und der Sternpunktdifferenzspannung unabhängig von der jeweiligen Energietransfersituation zwischen den zwei Dreileitungsnetzen erlaubt. Die Sternpunktdifferenzspannung kann dabei zumindest in demjenigen Bereich frei gewählt werden, in dem dies für die angeschlossenen Lasten zulässig ist.

So kann z.B. ein Kreisstrom und/oder eine Sternpunktdifferenzspannung als Gleichstrom bzw. Gleichspannung eingeprägt werden. Dies ist insbesondere in Anwendungsfällen vorteilhaft, in denen eine konstante Potentialdifferenz zwischen den Sternpunkten zulässig ist, beispielsweise bei Anschluss des Direktumrichters an einen Transformator oder bezüglich seiner Wicklungen nicht geerdeten Generator und bei anderen potentialfreien Anwendungen.

Gemäß einer vorteilhaften Weiterbildung der Erfindung werden der Kreisstrom als Gleichstrom eingestellt und die Sternpunktdifferenzspannung als Gleichspannung eingestellt. Dies hat den Vorteil, dass das Produkt aus erforderlichem Kreisstrom und erforderlicher Sternpunktdifferenzspannung so gering wie möglich ist, um die auftretende Energieverschiebung zwischen den Umrichterzweigen zu minimieren. Durch Minimierung der erforderlichen maximalen Spannung über den einzelnen Umrichterzweigen bzw. des erforderlichen Stroms in den einzelnen Umrichterzweigen können weniger bzw. kleinere Bauteile verwendet werden, wodurch sich die Kosten vorteilhaft senken lassen.

Es ist ebenfalls vorteilhaft, einen Kreisstrom und/oder eine Sternpunktdifferenzspannung als Wechselstrom bzw. Wechselspannung einzuprägen. Dies ist insbesondere vorteilhaft, wenn die beiden Sternpunkte keine dauerhafte Potentialdifferenz zueinander aufweisen dürfen, wie z.B. bei einer Netzkopplung ohne Transformator.

Gemäß einer vorteilhaften Weiterbildung der Erfindung ist der Direktumrichter mit einem der beiden Dreileitungsnetze über einen Transformator verbunden. Dies ermöglicht eine Einstellung der Sternpunktdifferenzspannung, ohne einen Gleichtaktstrom hervorzurufen. Auf diese Weise wird die Verwendung von Sternpunktdifferenzspannung und Kreisstrom als Gleichgrößen ermöglicht, wodurch sich der Hardwareaufwand für den Direktumrichter minimieren lässt und ein Kostenvorteil erreichen lässt.

Gemäß einer vorteilhaften Weiterbildung der Erfindung werden ein Kreisstrom und eine Sternpunktdifferenzspannung eingeprägt, die gleich- oder gegenphasig und gleichfrequent zueinander sind, wobei die Frequenz unterschiedlich zu den beiden Frequenzen des ersten und des zweiten Dreileitungsnetzes ist. Dies hat den Vorteil, dass bestimmte Bauteile des Direktumrichters, wie z.B. die Größe eines eventuell notwendigen Gleichtaktfilters, beispielsweise durch die Wahl einer hohen Frequenz, verringert werden kann. Somit kann ein Direktumrichter kostengünstiger aufgebaut werden.

Gemäß einer vorteilhaften Weiterbildung der Erfindung werden der gemäß den oben beschriebenen Verfahren bereits bestehenden Sternpunktdifferenzspannung Spannungsanteile in der Netzfrequenz des ersten Dreileitungsnetzes überlagert. Gemäß einer weiteren vorteilhaften Weiterbildung der Erfindung werden der gemäß den oben beschriebenen Verfahren bereits bestehenden Sternpunktdifferenzspannung Spannungsanteile in der Netzfrequenz des zweiten Dreileitungsnetzes überlagert. Es können somit Spannungsanteile mit nur einer Frequenz oder mit zwei Frequenzen überlagert werden, nämlich der jeweiligen Netzfrequenz des ersten und des zweiten Dreileitungsnetzes. Die Spannungsanteile in der Sternpunktdifferenzspannung in Frequenz des ersten Dreileitungsnetzes und die Spannungsanteile in Frequenz des zweiten Dreileitungsnetzes ermöglichen zusammen mit dem oben beschriebenen Zusammenwirken der oben beschriebenen konstanten bzw. nicht-netzfrequenten Anteile der Sternpunktdifferenzspannung und des Kreisstroms den Energieaustausch zwischen beliebigen Zweigen des Direktumrichters. Dies ist beispielsweise sinnvoll, wenn neben der vom Betriebspunkt abhängigen Energieverschiebung in den einzelnen Zweigen unterschiedliche Verluste auftreten, was aufgrund von Fertigungstoleranzen der verwendeten Bauteile oder abweichenden Randbedingungen beim Betrieb des Direktumrichters der Fall sein kann. Eine besonders flexible Anpassung der Energieinhaltsregelung an praktisch beliebige Anwendungsfälle ist somit möglich.

Gemäß einer vorteilhaften Weiterbildung der Erfindung werden dem gemäß den oben beschriebenen Verfahren bereits bestehenden Kreisstrom Stromanteile in der Netzfrequenz des ersten Dreileitungsnetzes überlagert. Gemäß einer vorteilhaften Weiterbildung der Erfindung werden dem gemäß den oben beschriebenen Verfahren bereits bestehenden Kreisstrom Stromanteile in der Netzfrequenz des zweiten Dreileitungsnetzes überlagert. Die Stromanteile im Kreisstrom in Frequenz des ersten Dreileitungsnetzes und die Stromanteile in Frequenz des zweiten Dreileitungsnetzes ermöglichen zusammen mit dem oben beschriebenen Zusammenwirken der oben beschriebenen konstanten bzw. nicht-netzfrequenten Anteile der Sternpunktdifferenzspannung und des Kreisstroms den Energieaustausch zwischen beliebigen Zweigen des Direktumrichters. Dies ist beispielsweise sinnvoll, wenn neben der vom Betriebspunkt abhängigen Energieverschiebung in den einzelnen Zweigen unterschiedliche Verluste auftreten, was aufgrund von Fertigungstoleranzen der verwendeten Bauteile oder abweichenden Randbedingungen beim Betrieb des Direktumrichters der Fall sein kann. Eine besonders flexible Anpassung der Energieinhaltsregelung an praktisch beliebige Anwendungsfälle ist somit möglich.

Auch eine Kombination der genannten Verfahren ist vorteilhaft.

Die eingangs genannte Aufgabe wird ferner gelöst durch eine elektronische Steuerungseinrichtung für einen Direktumrichter, die eingerichtet ist zur Ausführung eines Verfahrens der zuvor beschriebenen Art.

Die Aufgabe wird ferner gelöst durch einen Direktumrichter mit einer Steuerungseinrichtung der zuvor beschriebenen Art.

Gemäß einer vorteilhaften Weiterbildung der Erfindung ist der Energiespeicher als Kondensator ausgebildet oder weist einen Kondensator auf. Gemäß einer vorteilhaften Weiterbildung der Erfindung ist der Energiespeicher als Batterie ausgebildet oder weist eine Batterie auf. Die Batterie ist gemäß einer vorteilhaften Weiterbildung als aufladbare Batterie ausgebildet. Durch die Verwendung der Batterie kann die Energiespeicherfähigkeit des Direktumrichters weiter erhöht werden, so dass auch längerfristig Energie zwischengespeichert werden kann.

Gemäß einer vorteilhaften Weiterbildung der Erfindung ist der Direktumrichter ein transformatorloser Direktumrichter zur Verbindung des ersten Dreileitungsnetzes mit dem zweiten Dreileitungsnetz mittels elektronische Halbleiterschalter aufweisenden Brückenmodulen, wobei der Direktumrichter sechs Brückenmodule oder Reihenschaltungen davon aufweist, mit folgenden Merkmalen:

a) ein erstes Brückenmodul oder eine erste Reihenschaltung von Brückenmodulen ist einerseits an eine erste Leitung des ersten Stromversorgungsnetzes und andererseits an eine erste Leitung des zweiten Stromversorgungsnetzes angeschlossen,

b) ein zweites Brückenmodul oder eine zweite Reihenschaltung von Brückenmodulen ist einerseits an eine zweite Leitung es ersten Stromversorgungsnetzes und andererseits an die erste Leitung des zweiten Stromversorgungsnetzes angeschlossen,

c) ein drittes Brückenmodul oder eine dritte Reihenschaltung von Brückenmodulen ist einerseits an die zweite Leitung des ersten Stromversorgungsnetzes und andererseits an eine zweite Leitung des zweiten Stromversorgungsnetzes angeschlossen,

d) ein viertes Brückenmodul oder eine vierte Reihenschaltung von Brückenmodulen ist einerseits an eine dritte Leitung des ersten Stromversorgungsnetzes und andererseits an die zweite Leitung des zweiten Stromversorgungsnetzes angeschlossen,

e) ein fünftes Brückenmodul oder eine fünfte Reihenschaltung von Brückenmodulen ist einerseits an die dritte Leitung des ersten Stromversorgungsnetzes und andererseits an eine dritte Leitung des zweiten Stromversorgungsnetzes angeschlossen,

f) ein sechstes Brückenmodul oder eine sechste Reihenschaltung von Brückenmodulen ist einerseits an die erste Leitung des ersten Stromversorgungsnetzes und andererseits an die dritte Leitung des zweiten Stromversorgungsnetzes angeschlossen.

Der Direktumrichter ermöglicht auf elegante Weise und mit geringem schaltungstechnischem Aufwand eine einfache und kostengünstige Kopplung und Direktumrichtung zwischen zwei Dreileitungsnetzen. Als Dreileitungsnetz wird hierbei jede elektrische Verbindung eines elektrischen oder elektronischen Bauteils über drei Versorgungsenergieführende Leitungen verstanden, wie z.B. ein elektromotorischer Antrieb, ein Energieversorgungsnetz oder ein elektrischer Generator. Mit dem erfindungsgemäßen Direktumrichter ist z.B. die Kopplung eines elektromotorischen Antriebs an ein Energieversorgungsnetz oder eines elektrischen Generators an ein Energieversorgungsnetz möglich. Selbstverständlich umfasst die Erfindung auch die Kopplung zweier Energieversorgungsnetze miteinander.

Mit der erläuterten Topologie kann gegenüber Direktumrichtern gemäß dem Stand der Technik ein vereinfachter und kostengünstigerer Aufbau erzielt werden. Dort wird wie erwähnt eine Anordnung von mindestens neun Brückenmodulen oder Reihenanordnungen davon benötigt. Durch die hier vorgeschlagene Topologie aus sechs Brückenmodulen oder Reihenschaltungen von Brückenmodulen ist damit eine Verringerung des Hardwareaufwands um mindestens ein Drittel bei gleicher Funktionalität möglich. Bei Verwendung einer entsprechend großen Anzahl von Brückenmodulen in der Reihenschaltung entfällt zudem der Bedarf für entsprechende Eingangs- und Ausgangsfilter vollständig. Anwendungsgebiete der vorgeschlagenen Topologie sind beispielsweise große geschwindigkeitsgeregelte Antriebe, Generatoren mit variabler Drehzahl sowie der Bereich der Netzkopplung mit integriertem Blindleistungsausgleich.

Der Direktumrichter kann eine Reihenschaltung einer Mehrzahl von Brückenmodulen aufweisen. Die Verwendung einer Reihenschaltung einer Mehrzahl von Brückenmodulen erlaubt eine erhöhte Flexibilität hinsichtlich der Einstellung der Ausgangsspannung. Zudem wird die Ausfallsicherheit erhöht, da eine Mehrzahl von Brückenmodulen eine gewisse Redundanz beinhaltet. So kann beispielsweise bei einem internen Defekt eines Brückenmoduls der Reihenschaltung, z.B. einem Defekt an einem Zwischenkreis-Kondensator oder einer Batterie, dieses Brückenmodul über die Vollbrückenschaltung überbrückt werden. Der hierdurch verursachte Spannungsausfall kann durch die übrigen Brückenmodule der Reihenschaltung kompensiert werden, indem durch entsprechende Steuerung der elektronischen Halbleiterschalter der Brückenmodule pro Brückenmodul eine jeweils erhöhte Ausgangsspannung eingestellt wird.

In einer vorteilhaften Ausführung der Erfindung werden identische Brückengleichspannungen in allen Brückenmodulen verwendet. Bei entsprechend hoher Anzahl von Brückenmodulen ist eine feine Einstellung der resultierenden Ausgangsspannung einer Reihenschaltung solcher Brückenmodule möglich.

In einer vorteilhaften Weiterbildung der Erfindung können Brückenmodule mit unterschiedlichen Brückengleichspannungen verwendet werden. Hierdurch können Brückenmodule mit unterschiedlichen Nennspannungen verwendet werden. Der Begriff Nennspannung beschreibt die seitens der Bauteile maximal erlaubte Brückengleichspannung. Dies erlaubt bezüglich der einstellbaren Ausgangsspannungen der einzelnen Brückenmodule unterschiedliche Spannungsbereiche. Hierdurch ergibt sich eine verbesserte Flexibilität hinsichtlich der diskreten, einstellbaren Spannungswerte einer Reihenschaltung von Brückenmodulen. Im Vergleich zur Verwendung identischer Brückengleichspannungen in allen Brückenmodulen ist damit bei einer geringeren Anzahl von Brückenmodulen bereits eine feine Einstellung der resultierenden Ausgangsspannung der Reihenschaltung von Brückenmodulen möglich.

Hierdurch kann vorteilhaft nach Art eines sukzessiv approximierenden Digital-Analog-Wandlers die Ausgangsspannung der Reihenschaltung durch Kombination unterschiedlicher Spannungswerte verschiedener Brückenmodule kombiniert werden. Beispielsweise können die Nennspannungen von Brückenmodul zu Brückenmodul jeweils um den Faktor 2 erhöht werden, was eine Einstellbarkeit der Ausgangsspannung der Reihenschaltung nach dem Binärsystem erlaubt. Nach einem anderen Beispiel werden jeweils mehrere Brückenmodule verwendet, bei denen die Brückengleichspannungen bzw. Nennspannungen voneinander verschieden sind, allerdings mit geringeren Unterschieden. Kommen als Brückengleichspannungen beispielsweise 600 V und 800 V in einer Reihenschaltung zum Einsatz, so verringert sich die kleinste einstellbare Spannungsstufe auf 800 V - 600 V = 200 V.

Gemäß einer vorteilhaften Weiterbildung der Erfindung weist wenigstens ein Brückenmodul folgende Merkmale auf:

a) Das Brückenmodul weist einen ersten und einen zweiten Anschluss zur Verbindung mit einer Leitung des Energieversorgungsnetzes oder einem Anschluss eines weiteren Brückenmoduls auf,
b) das Brückenmodul weist vier elektronische Halbleiterschalter in Vollbrückenschaltung auf,
c) der erste und der zweite Anschluss des Brückenmoduls ist mit einander gegenüberliegenden Anschlusspunkten der Vollbrückenschaltung verbunden,
d) das Brückenmodul weist einen Kondensator auf, der mit den weiteren einander gegenüberliegenden Anschlusspunkten der Vollbrückenschaltung verbunden ist.

Die Vollbrückenschaltung erlaubt dabei variabel eine Vielzahl einstellbarer Schaltzustände, z.B. die Schaltung einer direkten Verbindung zwischen dem ersten und dem zweiten Anschluss des Brückenmoduls (Überbrücken des Brückenmoduls) oder ein Laden oder Entladen des Kondensators mit der jeweils gewünschten, über die Halbleiterschalter wählbaren Polarität. Durch entsprechende Ansteuerung der Halbleiterschalter über eine Steuerungseinrichtung, die z.B. pulsbreitenmodulierte Ansteuersignale ausgibt, ist eine relativ feinstufige Ladung und Entladung des Kondensators möglich.

Gemäß einer vorteilhaften Weiterbildung der Erfindung weist wenigstens ein Brückenmodul folgende Merkmale auf:

a) das Brückenmodul weist eine Batterie auf,
b) das Brückenmodul weist einen steuerbaren Gleichspannungswandler auf, dessen eine Anschlussseite parallel zum Kondensator angeschlossen ist und an dessen andere Anschlussseite die Batterie angeschlossen ist.

Dies erlaubt auf elegante Weise und mit geringem schaltungstechnischem Aufwand eine Einbindung einer Batterie in den Direktumrichter. Mit der Batterie bzw. einer Mehrzahl von Batterien bei Verwendung einer Mehrzahl von Brückenmodulen kann eine unterbrechungsfreie Stromversorgung mit wenig Aufwand integriert werden. Bei Einsatz des Direktumrichters an einem Stromversorgungsnetz lässt sich so beispielsweise die Bereitstellung einer Minutenreserve zur Netzstabilisierung realisieren. Mittels der Batterien der Brückenmodule ist eine Pufferung der Energieversorgung je nach Auslegung der Batterien auch für einen größeren Zeitraum möglich, z.B. während Zeiten geringerer Energieerzeugung eines Windenergieparks. In vergleichbarer Weise kann eine Solarzellenenergieversorgungseinrichtung vorteilhaft mit der genannten Einrichtung an ein Dreiphasennetz angekoppelt werden. Vorteilhaft kann über die Batterien eine Zwischenspeicherung der Energie für sonnenlichtarme Zeiten oder die Nacht erfolgen.

Die Batterie ist vorteilhaft als aufladbare Batterie ausgebildet, z.B. als Nickelmetallhydrid-Akkumulator, Blei-Akkumulator oder Lithiumpolymer-Akkumulator. Selbstverständlich können auch andere Akkumulator-Technologien eingesetzt werden.

Eine solche Ausführung des Brückenmoduls ermöglicht es, die mit Hilfe der Batterie erzeugte Brückengleichspannung des Brückenmoduls unabhängig von der Batteriespannung konstant zu halten, und zwar durch entsprechende Steuerung des Gleichspannungswandlers. Hierdurch kann auch bei sinkender Batteriespannung eine konstante Ausgangsspannung aufrechterhalten werden. Als Brückenmodul sei in diesem Zusammenhang jegliche räumliche und bauliche Anordnung der genannten Elemente verstanden, unabhängig davon, ob die Elemente beispielsweise in einem Gehäuse zusammengefasst sind oder verteilt angeordnet sind. Beispielsweise kann die Batterie baulich getrennt von den übrigen Elementen des Brückenmoduls angeordnet sein. In einer vorteilhaften Weiterbildung der Erfindung ist die Batterie baulich in das Brückenmodul integriert.

Ein weiterer Vorteil ist, dass die Welligkeit des Leistungsbedarfs bzw. des durch das Brückenmodul fließenden Stroms im Wesentlichen von der Batterie entkoppelt werden kann. Es ist ein im Wesentlichen konstanter Stromfluss durch die Batterie möglich, d.h. die höherfrequenten Anteile im Energieversorgungsnetz können von der Batterie ferngehalten werden. Dies erhöht die potentielle Lebensdauer der Batterien erheblich.

Vorteilhaft kann eine Reihenschaltung von Brückenmodulen eingesetzt werden. Hierdurch kann eine direkte Reihenschaltung einer großen Anzahl von Batterien vermieden werden. Eine Integration einer Mehrzahl von Batterien ist dann über eine Mehrzahl der Brückenmodule, die jeweils eine eigene Batterie aufweisen, möglich. Dies vermeidet schaltungstechnischen Aufwand für gesonderte Balancier- oder Lade-/Entladeschaltungen für die Batterien und verringert damit den gesamten schaltungstechnischen Aufwand.

Vorteilhaft wird die Batteriespannung mit Rücksicht auf die Brückengleichspannung bzw. die Nennspannung des jeweiligen Brückenmoduls gewählt. Große Übersetzungsverhältnisse des Gleichspannungswandlers lassen sich somit vermeiden und der Wirkungsgrad wird optimiert. Im Fall unterschiedlicher Nennspannungen in den Brückenmodulen eines Umrichters unterscheiden sich dann auch die Spannungen der verwendeten Batterien voneinander.

Ein weiterer Vorteil ist, dass eine Abschaltung des Brückenmoduls über die Vollbrückenschaltung möglich ist. So kann etwa bei einem defekten Leistungshalbleiter die Abschaltung eines Brückenmoduls in einer Reihenschaltung von Brückenmodulen erfolgen. Über die verbleibenden Brückenmodule kann trotz Ausfall eines Brückenmoduls weiterhin die gewünschte Ausgangsspannung der Reihenschaltung konstant gehalten werden.

Ein weiterer Vorteil der Erfindung ist, dass ein Brückenmodul, dessen Batterie defekt ist, weiter in Betrieb bleiben kann. Im zeitlichen Mittel kann das Modul mit defekter Batterie zwar keine Energie liefern, es kann jedoch genutzt werden, um die Spannung über der Reihenschaltung von Brückenmodulen während eines Teils der Netzperiode zu erhöhen, und hilft so, die für einen ausfallsicheren Betrieb des Umrichters nötige Überdimensionierung der Nennspannungen der einzelnen Brückenmodule zu reduzieren.

Durch die beiden genannten Maßnahmen können besonders ausfallsichere unterbrechungsfreie Stromversorgungen bzw. Umrichtersysteme geschaffen werden.

Ein weiterer Vorteil der Erfindung ist, dass durch den Gleichspannungswandler unterschiedliche Spannungsniveaus der Batterie, die sich je nach Ladezustand einstellen, kompensiert werden können. Hierdurch kann das Brückenmodul eine gewünschte konstante Ausgangsspannung erzeugen. Somit kann auch bei Verwendung der Brückenmodule in einer Reihenschaltung, z.B. in einem Umrichter, eine konstante Spannung am Dreileitungsnetz aufrechterhalten werden. Ein weiterer Vorteil ist, dass die bei bekannten Umrichtern vorgesehene Überdimensionierung bezüglich der Modulanzahl bzw. der Batteriespannung nicht mehr erforderlich ist, da bei Ausfall eines Brückenmoduls bzw. der Batterie des Brückenmoduls die fehlende Spannung durch eine entsprechende Anhebung der Ausgangsspannungen und gegebenenfalls der Brückengleichspannungen der übrigen Brückenmodule ausgeglichen werden kann.

Bei entsprechender Auslegung des Gleichspannungswandlers kann grundsätzlich auch mit einer geringeren Anzahl von Brückenmodulen bzw. Batterien die Einrichtung im Vergleich zu unterbrechungsfreien Stromversorgungen aus dem Stand der Technik aufgebaut werden. Hierdurch lassen sich besonders kostengünstige unterbrechungsfreie Stromversorgungen realisieren.

Je nach Sicherheits- und Zuverlässigkeitsanforderungen kann in einer vorteilhaften Ausgestaltung die Reihenschaltung der Brückenmodule von vornherein überdimensioniert ausgeführt werden, d.h. es kann eine größere Anzahl von Brückenmodulen bzw. Batterien vorgesehen werden als für die Erreichung der gewünschten Ausgangsspannung an sich notwendig wäre. Es werden somit redundante Brückenmodule vorgesehen. Die gewünschte Ausgangsspannung kann durch Abwärtswandlung der Brückengleichspannungen der einzelnen Brückenmodule über deren Brückenschaltungen erfolgen. Da jedes einzelne Modul so weniger Energie bereitstellen muss, werden hierdurch einerseits die Batterien geschont. Zudem kann auch bei Ausfall einer größeren Anzahl von Brückenmodulen die gewünschte Ausgangsspannung aufrechterhalten werden. Hierdurch kann auch die Ausfallsicherheit der gesamten Einrichtung z.B. gegenüber reinen Reihenschaltungen von Batterien weiter erhöht werden.

Gemäß einer vorteilhaften Weiterbildung der Erfindung ist der Gleichspannungswandler zur Bereitstellung einer Ausgangsspannung an dem Kondensator eingerichtet, die je nach Ausführung und Steuerung des Gleichspannungswandlers höher, niedriger oder gleich der Spannung der Batterie einstellbar ist. Die Verwendung eines solchen steuerbaren Gleichspannungswandlers erlaubt eine hohe Flexibilität bei der Verwendung des Brückenmoduls bzw. einer Mehrzahl von Brückenmodulen und der Steuerung von deren Ausgangsspannung. Der Gleichspannungswandler kann als reiner Aufwärtswandler (Ausgangsspannung höher oder gleich der Batteriespannung), reiner Abwärtswandler (Ausgangsspannung niedriger oder gleich der Batteriespannung) oder als kombinierter Aufwärts-/Abwärtswandler ausgelegt sein. Vorteilhaft ist der Einsatz eines Aufwärtswandlers, da hierfür zum einen weniger Bauteile benötigt werden als für einen kombinierten Aufwärts-/Abwärtswandler und zum anderen eine geringere Batteriespannung benötigt wird, was den potentiellen Bedarf an Balanciermöglichkeiten verringert.

Gemäß einer vorteilhaften Weiterbildung der Erfindung ist der Gleichspannungswandler ein bidirektionaler Gleichspannungswandler. Hierdurch kann nicht nur in der einen Richtung die Energie für die Brückengleichspannung am mit dem Kondensator verbundenen Ausgang des Gleichspannungswandlers variabel bereitgestellt werden, sondern zusätzlich auch die Batterie mit einer von der mit dem Kondensator verbundenen Seite des Gleichspannungswandlers abgeleiteten Spannung mit einer für den jeweiligen Batteriezustand geeigneten Ladespannung geladen werden. Zusätzlich ist auch eine definierte Entladung der Batterie über den bidirektionalen Gleichspannungswandler steuerbar, z.B. zum Zweck der Formierung der Batterie.

Gemäß einer vorteilhaften Weiterbildung der Erfindung weist der Gleichspannungswandler eine Halbbrücke mit zwei elektronischen Halbleiterschaltern auf. Vorteilhaft können Halbleiterschalter des gleichen Typs verwendet werden wie für die Vollbrückenschaltung. Dies erlaubt einen einfachen und kostengünstigen Aufbau des Gleichspannungswandlers aus wenigen Bauteilen und damit einen kostengünstigen Aufbau des gesamten Brückenmoduls.

In einer vorteilhaften Weiterbildung der Erfindung sind die elektronischen Halbleiterschalter in Form eines dreiphasigen IGBT-Moduls vorgesehen. Als IGBT (Insulated Gate Bipolar Transistor) bezeichnet man ein Vierschicht-Halbleiterbauelement, das mittels eines Gates gesteuert wird. IGBTs sind eine Weiterentwicklung von Leistungs-MOSFETs. Ausgangsseitig weisen IGBTs P-N-Halbleiterübergänge auf. Somit ist ein IGBT eine Art Kombination aus einem Feldeffekt-Halbleiterbauelement und einem Bipolar-Halbleiterbauelement. IGBTs werden in der Energieversorgungstechnik häufig in Form von Modulen mit drei Halbbrücken, d.h. sechs IGBT-Halbleiterschaltern, verwendet. Solche Module sind daher einfach und kostengünstig erhältlich. Die Erfindung zeigt einen eleganten Weg auf, die in einem dreiphasigen IGBT-Modul vorhandenen sechs Halbleiterschalter bzw. drei Halbbrücken effizient für den Aufbau eines Brückenmoduls einzusetzen.

Gemäß einer vorteilhaften Weiterbildung der Erfindung ist in Reihe zu einem Brückenmodul oder einer Reihenschaltung von Brückenmodulen wenigstens eine Drossel geschaltet. Die Drossel bewirkt durch ihre Energiespeicherungseigenschaft einer Glättung des Stromverlaufs durch das Brückenmodul bzw. durch die Reihenschaltung von Brückenmodulen.

Gemäß einer vorteilhaften Weiterbildung der Erfindung ist in einer Reihenschaltung von Brückenmodulen eine Steuereinheit dazu eingerichtet, ein als defekt erkanntes Brückenmodul abzuschalten. Die Abschaltung kann durch Überbrücken der Anschlüsse des Brückenmoduls über dessen Halbleiterschalter erfolgen. Gemäß einer vorteilhaften Weiterbildung der Erfindung ist eine Steuereinheit dazu eingerichtet ist, eine als defekt erkannte Batterie eines Brückenmoduls abzuschalten. Die Abschaltung kann z.B. durch die Halbleiterschalter des Gleichspannungswandlers erfolgen. Die Steuereinheit kann eine dem Brückenmodul zugeordnete Steuereinheit, eine übergeordnete Steuereinheit für eine Mehrzahl von Brückenmodulen oder eine zentrale Steuereinheit für den gesamten Direktumrichter sein.

Die Aufgabe wird ferner durch ein Computerprogramm mit Programmcodemitteln gelöst, das eingerichtet ist zur Durchführung des Verfahrens der zuvor beschriebenen Art, wenn das Computerprogramm auf einem Rechner ausgeführt wird. Der Rechner kann z.B. ein Mikroprozessor oder Mikrocontroller der genannten elektronischen Steuerungseinrichtung für einen Direktumrichter sein, oder ein Steuerungscomputer einer Umrichteranlage.

Die Aufgabe wird ferner gelöst durch ein Computerprogramm mit Programmcodemitteln, die auf einem maschinenlesbaren Träger gespeichert sind, eingerichtet zur Durchführung des Verfahrens der zuvor beschriebenen Art, wenn das Computerprogramm auf einem Rechner ausgeführt wird.

Die Erfindung wird nachfolgend anhand von Ausführungsbeispielen unter Verwendung von Zeichnungen näher erläutert. Es zeigen

Figur 1 - ein Brückenmodul in einer ersten Ausführungsform und

Figur 2 - ein Brückenmodul in einer zweiten Ausführungsform und

Figur 3 - einen Direktumrichter in Form eines Hexverters und

Figur 4 - den Direktumrichter gemäß Figur 3 mit einer Steuerungseinrichtung und

Figuren 5 und 6 - einen Energieinhaltsregler in schematischer Darstellung.

In den Figuren werden gleiche Bezugszeichen für einander entsprechende Elemente verwendet.

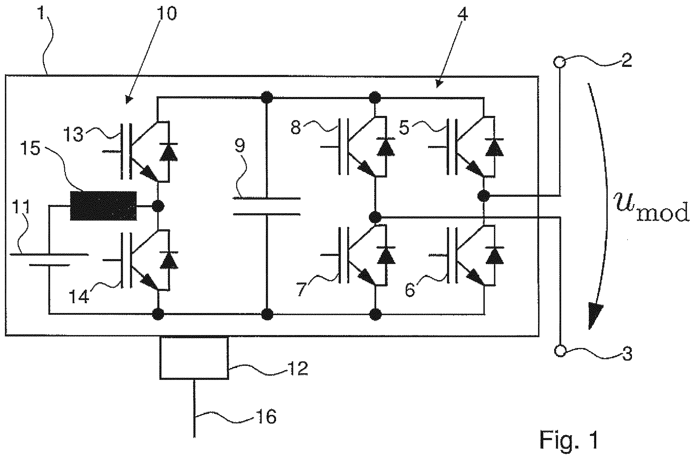

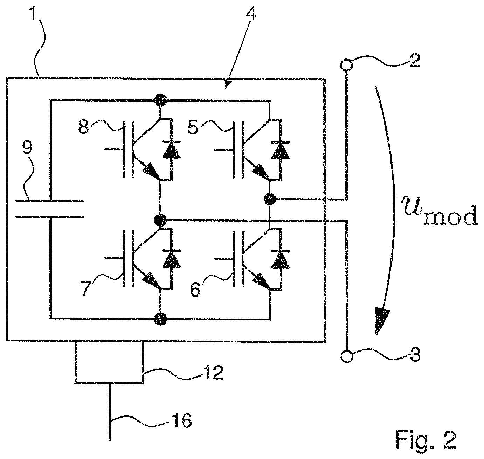

Der Hexverter kann sowohl mit Brückenmodulen ohne Batterie als auch mit Brückenmodulen mit Batterie aufgebaut werden, wobei auch Mischbestückungen möglich sind. Anhand der Figur 1 wird zunächst ein Brückenmodul mit Batterie beschrieben. Die Ausführungen gelten grundsätzlich auch für das anhand der Figur 2 beschriebene Brückenmodul ohne Batterie, wobei dort die Pufferfunktion der Batterie entfällt.

Die Figur 1 zeigt ein Brückenmodul 1, das als Einrichtung zur Einbindung wenigstens einer Batterie in ein Energieversorgungsnetz geeignet ist. Das Brückenmodul 1 weist als externe Anschlüsse einen ersten Anschluss 2 und einen zweiten Anschluss 3 auf. Die Anschlüsse 2, 3 sind die Außenverbindungen des Brückenmoduls mit einem Energieversorgungsnetz, weiteren Brückenmodulen eines Umrichterzweigs oder sonstigen Bauelementen. Das Brückenmodul 1 weist eine Vollbrückenschaltung 4 mit vier elektronischen Halbleiterschaltern 5, 6, 7, 8 auf. Zwischen zwei gegenüberliegenden Anschlusspunkten 16, 17 der Vollbrückenschaltung 4 ist ein Bipolar-Kondensator 9 angeschlossen. Die übrigen zwei gegenüberliegenden Anschlusspunkte 18, 19 der Vollbrückenschaltung 4 sind mit den Außenanschlüssen 2, 3 verbunden. Die Anschlusspunkte 16, 17 sind mit einem steuerbaren, bidirektionalen Gleichspannungswandler 10 verbunden, der als kombinierter Aufwärts-/Abwärtswandler ausgebildet ist. Der Gleichspannungswandler ist parallel zum Kondensator 9 geschaltet. Auf der gegenüberliegenden Anschlussseite des Gleichspannungswandlers 10 ist eine mit dem Gleichspannungswandler 10 verbundene Batterie 11 vorgesehen. Das Brückenmodul 1 weist außerdem eine lokale Steuereinheit 12 auf, z.B. in Form eines Mikroprozessors oder einer Logikschaltung. Die lokale Steuereinheit 12 ist mit Steueranschlüssen der Halbleiterschalter 5, 6, 7, 8 sowie mit einem Steuereingang des Gleichspannungswandlers 10 verbunden. Die lokale Steuereinheit 12 führt ein Steuerprogramm aus, mit dem die Funktion des Gleichspannungswandlers 10 sowie die Schaltzustände der Halbleiterschalter 5, 6, 7, 8 gesteuert werden.

Die Halbleiterschalter 5, 6, 7, 8 der Vollbrücke 4 sind jeweils z.B. als IGBT ausgebildet. Ferner weist der Gleichspannungswandler 10 zwei weitere elektronische Halbleiterschalter 13, 14 auf, die z.B. als IGBT ausgebildet sind. Die Gateanschlüsse der Halbleiterschalter 13, 14 sind, ebenso wie die Gateanschlüsse der Halbleiterschalter 5, 6, 7, 8, mit der lokalen Steuereinheit 12 verbunden. Die lokale Steuereinheit 12 führt hierüber eine Steuerung des Gleichspannungswandlers 10 durch entsprechende Ansteuerung der Halbleiterschalter 13, 14 durch. Die Halbleiterschalter 13, 14 sind in Halbbrückenschaltung angeordnet. Hierbei ist der Kollektoranschluss des Halbleiterschalters 13 mit dem Anschlusspunkt 16 der Vollbrückenschaltung 4 verbunden. Der Emitteranschluss des Halbleiterschalters 14 ist mit dem Anschlusspunkt 17 der Vollbrückenschaltung 4 verbunden. Der Emitteranschluss des Halbleiterschalters 13 ist mit dem Kollektoranschluss des Halbleiterschalters 14 sowie mit einer Drossel 15 verbunden. Die Drossel 15 ist mit einem Anschluss der Batterie 11 verbunden, z.B. mit dem Pluspol. Ein zweiter Anschluss, z.B. der Minuspol, der Batterie 11 ist mit dem Emitteranschluss des Halbleiterschalters 14 und damit mit dem Anschlusspunkt 17 der Vollbrückenschaltung 4 verbunden.

Die Verwendung der Halbleiterschalter 13, 14 sowie der Drossel 15 erlaubt einen einfachen und kostengünstigen Aufbau eines bidirektionalen, steuerbaren Gleichspannungswandlers, der damit als Aufwärtswandler ausgebildet ist. Zudem kann ein dreiphasiges IGBT-Modul verwendet werden, das bereits sechs IGBTs aufweist, die jeweils paarweise in Halbbrückenschaltung geschaltet sind. Hierbei kann eine erste Halbbrücke des IGBT-Moduls für die Anordnung der Halbleiterschalter 5, 6 verwendet werden, eine zweite Halbbrücke für die Halbleiterschalter 7, 8 und die dritte Halbbrücke für die Halbleiterschalter 13, 14.

Die lokale Steuereinheit 12 ist über eine Leitung 16 mit einer zentralen elektronische Steuerungseinrichtung 40 verbunden, deren Aufbau und Funktion später noch erläutert wird. Die Leitung 16 kann z.B. ein Datenbus sein, z.B. ein serieller Datenbus. Über die Leitung 16 erhält die lokale Steuereinheit 12 Sollwerte, anhand derer sie die Vollbrückenschaltung 4 und den Gleichspannungswandler 10 steuert. Über die Leitung 16 übermittelt die lokale Steuereinheit 12 zudem Kennwerte an die zentrale elektronische Steuerungseinrichtung 40, z.B. den Ladungszustand des Kondensators 9 und/oder der Batterie 11.

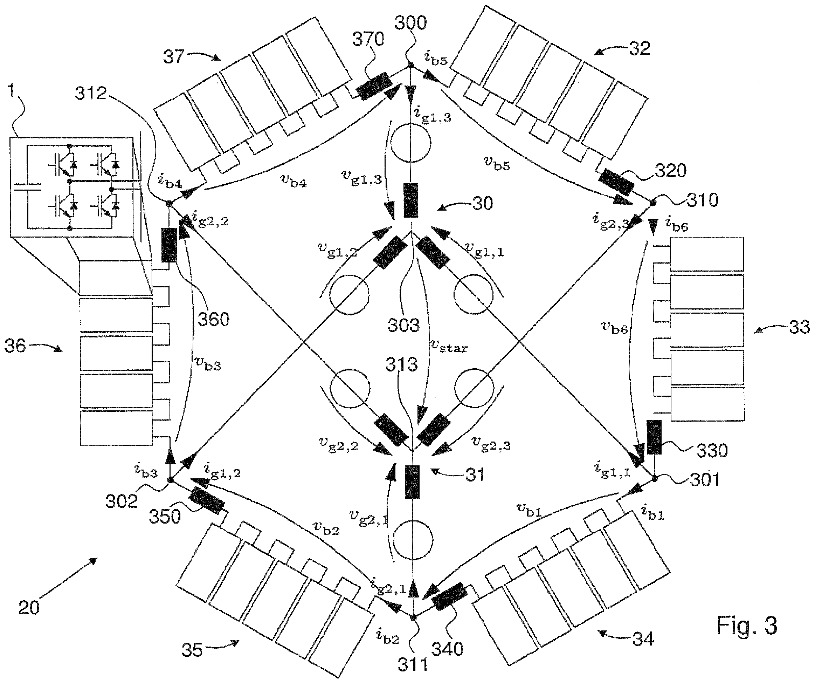

Die Figur 2 zeigt eine weitere Ausführungsform eines Brückenmoduls 1. Das Brückenmodul 1 gemäß Figur 3 ist vergleichbar aufgebaut wie das Brückenmodul 1 gemäß Figur 2, jedoch ohne den Gleichspannungswandler 10 und die Batterie 11.

Die Figur 3 zeigt einen Direktumrichter 20, mit dem ein erstes Dreileitungsnetz 30, z.B. ein als Drehstromnetz ausgebildetes Energieversorgungsnetz, mit einem zweiten Dreileitungsnetz 31 verbunden ist. Das zweite Dreileitungsnetz 31 kann ebenfalls als Drehstromnetz ausgebildet sein. Zur Verbindung dienen jeweils Reihenschaltungen 32, 33, 34, 35, 36, 37 von Brückenmodulen 1, wobei die Brückenmodule wahlweise mit oder ohne Batterie und Gleichspannungswandler ausgebildet sein können. Es können hierbei Brückenmodule gemäß den Figuren 1 und 2 eingesetzt werden, auch in Mischbestückung. In Reihe zur jeweiligen Reihenschaltung 32, 33, 34, 35, 36, 37 ist jeweils eine Drossel 320, 330, 340, 350, 360, 370 angeordnet. Die Einrichtung ist wie folgt aufgebaut:

Eine erste Reihenschaltung 32 von Brückenmodulen 1 ist an einem Verbindungspunkt 300 einerseits an eine erste Leitung des ersten Dreileitungsnetzes 30 und an einem Verbindungspunkt 310 andererseits an eine erste Leitung des zweiten Dreileitungsnetzes 31 angeschlossen. Eine zweite Reihenschaltung 33 von Brückenmodulen 1 ist an einem Verbindungspunkt 301 einerseits an eine zweite Leitung des ersten Dreileitungsnetzes 30 und an dem Verbindungspunkt 310 andererseits an die erste Leitung des zweiten Dreileitungsnetzes 31 angeschlossen. Eine dritte Reihenschaltung 34 von Brückenmodulen 1 ist an dem Verbindungspunkt 301 einerseits an die zweite Leitung des ersten Dreileitungsnetzes 30 und an einem Verbindungspunkt 311 andererseits an eine zweite Leitung des zweiten Dreileitungsnetzes 31 angeschlossen. Eine vierte Reihenschaltung 35 von Brückenmodulen 1 ist an einem Verbindungspunkt 302 einerseits an eine dritte Leitung des ersten Dreileitungsnetzes 30 und an dem Verbindungspunkt 311 andererseits an die zweite Leitung des zweiten Dreileitungsnetzes 31 angeschlossen. Eine fünfte Reihenschaltung 36 von Brückenmodulen 1 ist an dem Verbindungspunkt 302 einerseits an die dritte Leitung des ersten Dreileitungsnetzes 30 und an einem Verbindungspunkt 312 andererseits an eine dritte Leitung des zweiten Dreileitungsnetzes 31 angeschlossen. Eine sechste Reihenschaltung 37 von Brückenmodulen 1 ist an dem Verbindungspunkt 300 einerseits an die erste Leitung des ersten Dreileitungsnetzes 30 und an dem Verbindungspunkt 312 andererseits an die dritte Leitung des zweiten Dreileitungsnetzes 31 angeschlossen. Jede der Reihenschaltungen 32, 33, 34, 35, 36, 37 bildet jeweils einen Umrichterzweig.

Die Figur 3 zeigt zudem einen Sternpunkt 303 des ersten Dreileitungsnetzes 30 und einen Sternpunkt 313 des zweiten Dreileitungsnetzes 31.

Die in Figur 3 gezeigte Topologie erlaubt bei entsprechender Steuerung von batteriebestückten Brückenmodulen 1 die Realisierung einer unterbrechungsfreien Stromversorgung in dem Energieversorgungsnetz. Zudem kann über die Brückenmodule 1 eine Blindleistungskompensation sowie eine Kompensation von Schwankungen des Energiebedarfs bzw. beim Einsatz zur Anbindung eines Generators an ein Energieversorgungsnetz eine Kompensation von Schwankungen der bereitgestellten Energie erfolgen. Zur Koordination der Steuerung der Mehrzahl der Brückenmodule 1 ist die zentrale elektronische Steuerungseinrichtung 40 vorgesehen, die mit den einzelnen lokalen Steuereinheiten 12 der Brückenmodule 1 über Datenkommunikation in Verbindung steht. Die zentrale elektronische Steuereinrichtung 40 steuert die Brückengleichspannungen der einzelnen Brückenmodule sowie die von den einzelnen Brückenmodulen abgegebenen Ausgangsspannungen.

Die Figur 3 zeigt ferner die in den beiden Dreileitungsnetzen 30, 31 sowie dem Direktumrichter 20 auftretenden Spannungen und Ströme. Diese seien für die nachfolgenden Betrachtungen wie folgt definiert:

$$v_{g1,1}(t) = \hat{v}_{g1} \cos(\omega_1 t) \qquad\qquad i_{g1,1}(t) = \hat{i}_{g1} \cos(\omega_1 t - \varphi_1)$$

$$v_{g1,2}(t) = \hat{v}_{g1} \cos\left(\omega_1 t - \frac{2\pi}{3}\right) \qquad i_{g1,2}(t) = \hat{i}_{g1} \cos\left(\omega_1 t - \varphi_1 - \frac{2\pi}{3}\right)$$

$$v_{g1,3}(t) = \hat{v}_{g1} \cos\left(\omega_1 t - \frac{4\pi}{3}\right) \qquad i_{g1,3}(t) = \hat{i}_{g1} \cos\left(\omega_1 t - \varphi_1 - \frac{4\pi}{3}\right)$$

$$v_{g2,1}(t) = \hat{v}_{g1} \cos(\omega_2 t + \psi) \qquad i_{g2,1}(t) = \hat{i}_{g2} \cos(\omega_2 t - \varphi_2 + \psi)$$

$$v_{g2,2}(t) = \hat{v}_{g2} \cos\left(\omega_2 t + \psi - \frac{2\pi}{3}\right) \qquad i_{g2,2}(t) = \hat{i}_{g2} \cos\left(\omega_2 t - \varphi_2 + \psi - \frac{2\pi}{3}\right)$$

$$v_{g2,3}(t) = \hat{v}_{g2}\cos\left(\omega_2 t + \psi - \frac{4\pi}{3}\right) \qquad i_{g2,3}(t) = \hat{i}_{g2}\cos\left(\omega_2 t - \varphi_2 + \psi - \frac{4\pi}{3}\right)$$

Hierbei bezeichnen die mit dem Dach versehenen Größen die jeweiligen Amplituden. $\omega_1$ ist die Kreisfrequenz des ersten Dreileitungsnetzes 30, $\omega_2$ ist die Kreisfrequenz des zweiten Dreileitungsnetzes 31. $\psi$ beschreibt die Phasenverschiebung der Spannungen des zweiten Dreileitungsnetzes gegenüber dem ersten Dreileitungsnetz. $\varphi_1$ beschreibt die Phasenverschiebung zwischen den Strömen und Spannungen im ersten Dreileitungsnetz, $\varphi_2$ beschreibt die Phasenverschiebung zwischen den Strömen und Spannungen im zweiten Dreileitungsnetz.

Der Gesamtenergieinhalt des Direktumrichters 20 lässt sich z.B. durch Wahl der vom ersten Dreileitungsnetz 30 in den Direktumrichter 20 abgegebenen Wirkleistung $-P_{g1}$ unter Berücksichtigung der an das zweite Dreileitungsnetz 31 abgegebenen Wirkleistung $P_{g2}$ regeln. Unter Vernachlässigung der Verluste im Direktumrichter 20 gilt für den stationären Fall:

$$P_{g1} - P_{g2} = 0$$

Für die weitere Betrachtung wird zwischen zwei Fällen unterschieden: Betrieb mit stark ungleichen Frequenzen in den beiden Dreileitungsnetzen und Betrieb mit im Wesentlichen gleichen Frequenzen. Die nachfolgenden Betrachtungen beziehen sich ferner auf die Gleichanteile $\overline{P}_{zi}$ der Leistungen in den Umrichterzweigen 32, 33, 34, 35, 36, 37, die nachfolgend durch Indices $i$=1 bis 6 unterschieden werden. Eine Betrachtung der Gleichanteile ist sinnvoll, da diese wichtig für einen stabilen Betrieb des Umrichters sind.

Für die Zweigspannungen $v_{bi}$ in den Umrichterzweigen $i$=1 bis 6 gilt:

$$v_{b1} = v_{g1,1} - v_{g2,1} + v_{star} \qquad\qquad (1)$$

$$v_{b2} = v_{g2,1} - v_{g1,2} - v_{star} \qquad\qquad (2)$$

$$v_{b3} = v_{g1,2} - v_{g2,2} + v_{star} \qquad\qquad (3)$$

$$v_{b4} = v_{g2,2} - v_{g1,3} - v_{star} \qquad\qquad (4)$$

$$v_{b5} = v_{g1,3} - v_{g2,3} + v_{star} \qquad\qquad (5)$$

$$v_{b6} = v_{g2,3} - v_{g1,1} - v_{star} \qquad\qquad (6)$$

Ferner wird die Sternpunktdifferenzspannung $v_{star}$ betrachtet, die als Differenz zwischen den Potentialen der Sternpunkte 303, 313 des ersten und des zweiten Dreileitungsnetzes 30, 31 definiert ist. Die Sternpunktdifferenzspannung $v_{star}$ ist, sofern dies für die Last zulässig ist, frei wählbar. Zudem lässt sich unabhängig von den Strömen in den Dreileitungsnetzen ein Kreisstrom $i_{cir} = \dfrac{1}{6}\sum_{i=1}^{6} i_{bi}$ regeln, d.h. die Summer aller Ströme $i_{b1}$, $i_{b2}$, ..., $i_{b6}$ in den Umrichterzweigen 32, 33, 34, 35, 36, 37. Mit der Sternpunktdifferenzspannung und dem Kreisstrom stehen für die Energieregelung zwei frei wählbare Größen zur Verfügung.

Zunächst sei ein Betrieb mit unterschiedlichen Frequenzen betrachtet. Abhängig vom Betriebspunkt stellt sich unter der Voraussetzung zweier symmetrischer Dreileitungsnetze eine Energieverschiebung zwischen jeweils zwei benachbarten Zweigen des Direktumrichters 20 ein. Die Energieverschiebung lässt sich in Form einer Verschiebungsleistung $P_s$ ausdrücken, die abhängig von den auftretenden Blindleistungen in den Dreileitungsnetzen 30, 31 ist:

$$P_s = \frac{\sqrt{3}}{18}\left(Q_2 - Q_1\right) \tag{7}$$

Der Mittelwert der einzelnen Zweigleistungen $\overline{P}_{zi}$ muss für einen dauerhaften, stabilen Betrieb gleich 0 sein. Es gilt daher:

$$\overline{P}_{z1} = -\frac{1}{6}\left(P_1 + P_2\right) + P_s \tag{8}$$

$$\overline{P}_{z2} = -\frac{1}{6}\left(P_1 + P_2\right) - P_s \tag{9}$$

$$\overline{P}_{z3} = -\frac{1}{6}\left(P_1 + P_2\right) + P_s \tag{10}$$

$$\overline{P}_{z4} = -\frac{1}{6}\left(P_1 + P_2\right) - P_s \tag{11}$$

$$\overline{P}_{z5} = -\frac{1}{6}\left(P_1 + P_2\right) + P_s \tag{12}$$

$$\overline{P}_{z6} = -\frac{1}{6}\left(P_1 + P_2\right) - P_s \tag{13}$$

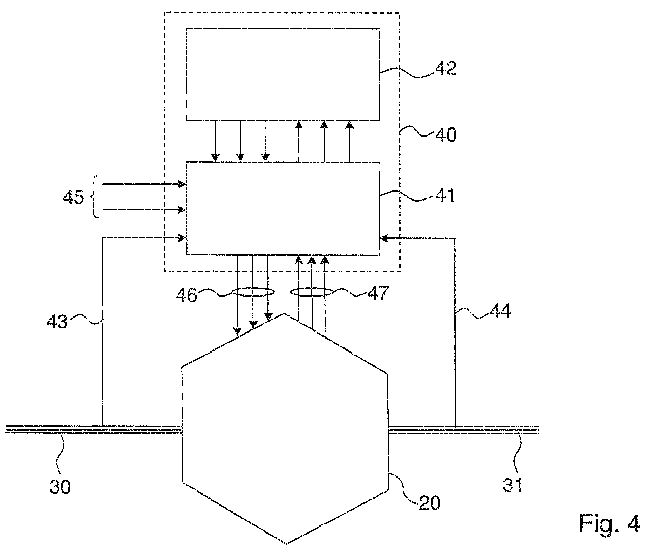

Unter Berücksichtigung der stationären Bedingung $P_1 + P_2 = 0$ verbleibt die Verschiebungsleistung $P_s$ als Störgröße. Zu ihrer Kompensation kann die an das erste Dreileitungsnetz 30 abgegebene Blindleistung derart eingestellt werden, dass sie der an das zweite Dreileitungsnetz 31 abgegebenen Blindleistung entspricht. Dies wird nachfolgend anhand der Figur 4 näher erläutert.

Die Figur 4 zeigt schematisch das erste Dreileitungsnetz 30, den Direktumrichter 20 und das zweite Dreileitungsnetz 31. Ferner ist eine zentrale elektronische Steuerungseinrichtung 40 zur Steuerung des Direktumrichters 20 dargestellt. Die elektronische Steuerungseinrichtung 40 kann mit einem Mikroprozessor ausgestattet sein, auf dem ein Steuerungsprogramm in Form eines Computerprogramms ausgeführt wird. Das Steuerungsprogramm kann eine Betriebssteuerungsebene 41 aufweisen, die dazu dient, die Grundfunktionen des Direktumrichters zu steuern, wie z.B. den Energietransfer von dem ersten Dreileitungsnetz in das zweite Dreileitungsnetz oder umgekehrt nach von außen vorgegebenen Energiebedarfs-, Energieangebots- und/oder Blindleistungskriterien zu steuern. Hierfür werden der Betriebssteuerungsebene 41 entsprechende Steuerdaten 45 von außen zugeführt, wie z.B. die zu übertragende Wirkleistung, die einzustellende Blindleistung und die Ausgangsspannung des Direktumrichters 20. Die Steuerungseinrichtung 40 weist zudem Eingangsschaltungen auf, über die der Steuerungseinrichtung 40 Messdaten über einen Messzweig 43 von dem ersten Dreileitungsnetz 30 und Messdaten über einen zweiten Messzweig 44 von dem zweiten Dreileitungsnetz 31 zugeführt werden. Die Steuerungseinrichtung 40 kann hierüber z.B. die jeweiligen Blindleistungen in den Dreileitungsnetzen 30, 31 ermitteln. Die Steuerungseinrichtung 40 weist eine Eingangsausschaltung auf, über die Rückmeldesignale 47 von den einzelnen lokalen Steuereinheiten 12 der Brückenmodule 1 der Umrichterzweige 32, 33, 34, 35, 36, 37 in die Steuerungseinrichtung 40 eingelesen werden. Die Steuerungseinrichtung 40 weist eine Ausgangsausschaltung auf, über die Ausgangssignale 46 an die einzelnen lokalen Steuereinheiten 12 der Brückenmodule 1 der Umrichterzweige 32, 33, 34, 35, 36, 37 abgegeben werden. Hierüber wird die eigentliche Grundfunktion des Direktumrichters gesteuert.

Das Betriebsprogramm weist ferner eine Ebene 42 zur Energieinhaltsregelung auf, mit der ein Verfahren zur Energieinhaltsregelung durchgeführt wird, mit dem die in jedem Umrichterzweig gespeicherte jeweilige elektrische Energiemenge oder eine die elektrische Energiemenge kennzeichnende elektrische Größe auf einen vorgegebenen Sollbereich geregelt wird.

Der Sollbereich kann z.B. ein bestimmter prozentualer Bereich der in dem jeweiligen Energiespeicher 9, 11 maximal speicherbaren Energiemenge oder ein Sollspannungsbereich, bezogen auf den maximalen zulässigen Spannungswert des Energiespeichers 9, 11 oder anderer Bauteile, sein. So kann z.B. vorgegeben sein, dass die in einem Energiespeicher gespeicherte Energiemenge immer im Bereich von 70% bis 100% der maximal speicherbaren Energiemenge liegt.

Die Ebene 42 zur Energieinhaltsregelung erhält Eingangsdaten von der Betriebssteuerungsebene 41, verarbeitet diese und sendet Steuerungsdaten an die Betriebssteuerungsebene 41 zurück, wie durch die Pfeile zwischen der Betriebssteuerungsebene 41 und der Ebene 42 zur Energieinhaltsregelung dargestellt. Im Falle der zuvor erwähnten Anpassung der Blindleistung empfängt die Ebene zur Energieinhaltsregelung 42 z.B. die an das erste Dreileitungsnetz 30 aktuell abgegebene Blindleistung $Q_1$ und gibt als Ausgangsgröße eine Vorgabe für die an das zweite Dreileitungsnetz 31 abzugebende Blindleistung $Q_2$ zurück, z.B. $Q_2 = Q_1$. In diesem Fall ist ein Regler mit besonders einfachem Aufbau vorgesehen, nämlich ein P-Regler mit der Verstärkung 1. Es können je nach Bedarf auch aufwendigere Reglertypen eingesetzt werden, wie z.B. PI-Regler oder PID-Regler, die die tatsächlichen Energieinhalte der einzelnen Brückenmodule berücksichtigen

Die Betriebssteuerungsebene 41 setzt die Anforderung zum Einstellen der Blindleistung $Q_2$ in entsprechende Steuerungsinformationen für die einzelnen lokalen Steuereinheiten 12 der Brückenmodule 1 um.

Eine weitere Ausführungsform der Energieinhaltsregelung kann von der Ebene 42 z.B. durch Kompensation der Verschiebungsleistung durch Einprägen bestimmter Kreisströme und Sternpunktdifferenzspannungen vorgenommen werden. Durch Einprägen sowohl von Kreisstrom als von Sternpunktdifferenzspannung ergibt sich an den einzelnen Unrichterzweigen jeweils ein zusätzlicher Term für die Zweigleistung. Ist es seitens der Anwendung möglich, eine konstante Potentialdifferenz zwischen den beiden Sternpunkten 303, 313 zuzulassen, z.B. bei Anschluss an einen Transformator, so ist es vorteilhaft, als Kreisstrom $i_{cir}$ und Sternpunktdifferenzspannung $v_{star}$ Gleichgrößen $I_{cir}$, $V_{star}$ einzuprägen. Die Verschiebungsleistung bestimmt sich dann wie folgt:

$$P_s = \frac{\sqrt{3}}{18}\left(Q_2 - Q_1\right) + V_{star} \cdot I_{cir} \qquad . \qquad\qquad (14)$$

Durch die Ebene 42 zur Energieinhaltsregelung wird dann das Produkt $V_{star} \cdot I_{cir}$ eingestellt auf $\dfrac{\sqrt{3}}{18}\left(Q_1 - Q_2\right).$

Wenn die beiden Sternpunkte 303, 313 keine dauerhafte Potentialdifferenz aufweisen dürfen, lassen sich für Kreisstrom und Sternpunktdifferenzspannung auch harmonische Wechselgrößen identischer Frequenz gemäß

$$v_{star}(t) = \hat{v}_{star} \cdot \cos(\omega_S t)$$

und

$$i_{cir}(t) = \hat{i}_{cir} \cdot \cos(\omega_S t)$$

verwenden, die aufgrund ihrer Gleichphasigkeit (bei identischen Vorzeichen von $\hat{v}_{star}$ und $\hat{i}_{cir}$) bzw. Gegenphasigkeit (bei unterschiedlichen Vorzeichen von $\hat{v}_{star}$ und $\hat{i}_{cir}$) den gleichen Effekt herbeiführen. Mit den Multiplikatoren $\hat{v}_{star}$ und $\hat{i}_{cir}$ der Sternpunktdifferenzspannung $v_{star}$ und des Kreisstroms $i_{cir}$ gilt:

$$P_s = \frac{\sqrt{3}}{18}\left(Q_2 - Q_1\right) + \frac{\hat{v}_{star} \cdot \hat{i}_{cir}}{2} \qquad . \qquad\qquad (15)$$

Entsprechend ist das Produkt aus $\hat{v}_{star} \cdot \hat{i}_{cir}$ durch die Ebene 42 zur Energieinhaltsregelung einzustellen auf

$$\frac{\sqrt{3}}{18}\left(Q_1 - Q_2\right).$$

Hierbei muss sich die für $v_{star}$ und $i_{cir}$ verwendete Frequenz ($\omega_S$) von den Frequenzen des ersten und des zweiten Dreileitungsnetzes 30, 31 unterscheiden.

Unsymmetrien in den Dreileitungsnetzen 30, 31 und ungleiche Verluste in den einzelnen Brückenmodulen 1 können zu Ungleichgewichten im Energieinhalt zwischen den Umrichterzweigen führen. Zur Kompensation solcher Ungleichgewichte wird vorgeschlagen, auch die den einzelnen Umrichterzweigen 32, 33, 34, 35, 36, 37 zugeführte Leistung separat zu regeln. Auch dies kann durch eine geeignete Wahl des Kreisstroms bzw. der Sternpunktdifferenzspannung erfolgen. In einer ersten Ausführungsform wird dabei davon ausgegangen, dass als Sternpunktdifferenzspan-nung eine Gleichspannung $V_{star}$ eingeprägt wird. Die in den einzelnen Umrichterzweigen 32, 33, 34, 35, 36, 37 fließenden Ströme werden mit eingeprägten Stromkomponenten $\hat{i}_{cir,n,m}$ überlagert:

$$i_{cir}(t) = I_{cir} + \hat{i}_{cir,1,1} \cdot \cos(\omega_1 t) + \hat{i}_{cir,1,2} \cdot \cos\left(\omega_1 t - \frac{2\pi}{3}\right) + \hat{i}_{cir,2,1} \cdot \cos\left(\omega_2 t + \psi + \frac{\pi}{3}\right)$$

$$+ \hat{i}_{cir,2,2} \cdot \cos\left(\omega_2 t + \psi - \frac{\pi}{3}\right) \qquad\qquad (16)$$

$$v_{star}(t) = V_{star} \qquad\qquad . \qquad\qquad (17)$$

Dann ergibt sich für die Zweigleistungen $\overline{P}_{zi}$:

$$
\begin{pmatrix} \overline{P}_{z1} \\ \overline{P}_{z2} \\ \overline{P}_{z3} \\ \overline{P}_{z4} \\ \overline{P}_{z5} \\ \overline{P}_{z6} \end{pmatrix}
=
\underbrace{\begin{pmatrix}
0,5 & -0,25 & -0,25 & -0,25 & 1 & 1 \\
0,25 & -0,5 & 0,25 & 0,25 & -1 & 1 \\
-0,25 & 0,5 & 0,5 & -0,25 & 1 & 1 \\
0,25 & 0,25 & -0,5 & 0,25 & -1 & 1 \\
-0,25 & -0,25 & -0,25 & 0,5 & 1 & 1 \\
-0,5 & 0,25 & 0,25 & -0,5 & -1 & 1
\end{pmatrix}}_{A_{cir}}
\begin{pmatrix}
\hat{i}_{cir,1,1} \cdot \hat{v}_{g1} \\
\hat{i}_{cir,1,2} \cdot \hat{v}_{g1} \\
\hat{i}_{cir,2,1} \cdot \hat{v}_{g2} \\
\hat{i}_{cir,2,2} \cdot \hat{v}_{g2} \\
\frac{\sqrt{3}}{18}(Q_2 - Q_1) + V_{star} \cdot I_{cir} \\
- P_1 - P_2
\end{pmatrix}
$$

$$. \qquad\qquad (18)$$

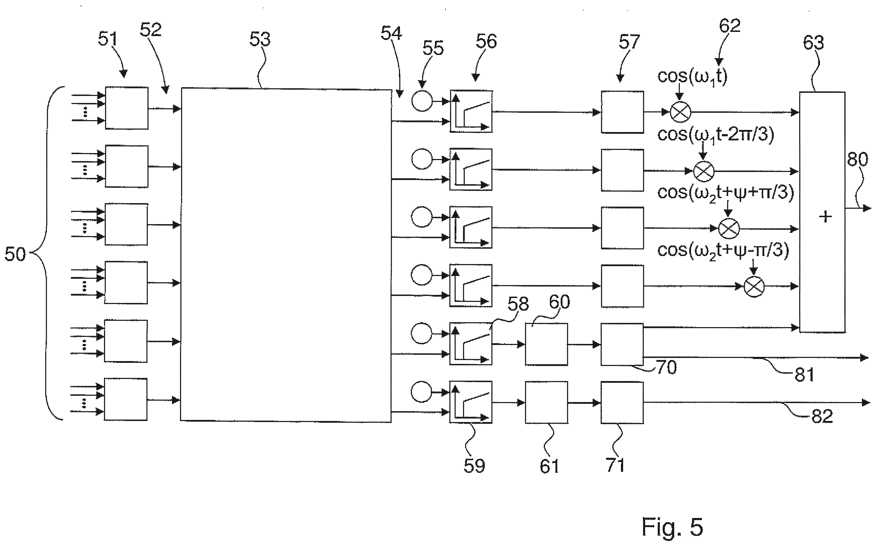

Die Matrix $A_{cir}$ ist invertierbar, was für die nachfolgend anhand der Figur 5 beschriebene Regelung ausgenutzt wird. Diese Art der Regelung hat den Vorteil, dass sich sämtliche Energieinhalte in den Umrichterzweigen durch Wahl des Kreisstroms und der Energieaufnahme aus dem Netz regeln lassen.

Die Figur 5 zeigt, von der linken Seite beginnend, sechs Summierblöcke 51, die jeweils einem Umrichterzweig 32, 33, 34, 35, 36, 37 zugeordnet sind. Den Summierblöcken 51 werden Eingangssignale 50 von den lokalen Steuereinheiten 12 der Brückenmodule 1 zugeführt, z.B. über Lichtwellenleiter. Jeder Summierblock 51 erhält als Eingangssignale 50 von jedem Brückenmodul 1 des jeweiligen Umrichterzweigs 32, 33, 34, 35, 36, 37 eine die in dem jeweiligen Brückenmodul 1 gespeicherte Energiemenge kennzeichnende elektrische Größe. Im Falle von Brückenmodulen ohne Batterie, wie in Figur 2 dargestellt, wird als Eingangsgröße z.B. die am Kondensator 9 zu messende Spannung oder das Quadrat der Spannung als Indikator für die in einem Kondensator gespeicherte Energiemenge übertragen. Im Falle eines Brückenmoduls mit Batterie, wie in Figur 1 dargestellt, wird z.B. eine die momentane Ladung der Batterie 11 kennzeichnende Größe übertragen. In jedem Summierblock 51 werden die dem Summierblock 51 zugeführten Eingangsgrößen aufsummiert und in einen jeweiligen Zweigenergieinhalt $\overline{E}_{zi}$ umgerechnet. Prinzipiell könnten die an den Ausgängen der Summierblöcke 51 anstehenden Größen 52 durch einen Regler, beispielsweise ausgeführt als PI-Regler, in erforderliche Zweigleistungen $\overline{P}_{zi}$ umgerechnet werden. In diesem Fall entsprächen die an den Ausgängen der Summierblöcke 51 anstehenden Größen 52 dem links vom Gleichheitszeichen in der Gleichung 18 stehenden Vektor. In einem Multiplikationsblock 53 würden die einzelnen Zweigleistungen $\overline{P}_{zi}$ mit der invertierten Matrix $A_{cir}^{-1}$ multipliziert. Der aus dem Multiplikationsblock 53 kommende Vektor 54 von Ausgangsdaten würde dann direkt den Blöcken 57 zugeführt.

Aufgrund der Linearität der Transformation in Block 53 ist jedoch auch möglich, Regler 56 erst nach der in Block 53 durchgeführten Transformation anzuwenden. Diese Variante ist in Figur 5 näher dargestellt. Hier werden die transformierten Energieinhalte vom Block 53 sechs Reglern 56 zugeführt, wobei die oberen vier Regler 56 der Regelung des Energieaustauschs dienen, der dadurch erforderlich wird, dass in den Umrichterzweigen 32, 33, 34, 35, 36, 37 unterschiedliche Verluste auftreten, während der Regler 58 der Ausregelung der Verschiebungsleistung zwischen benachbarten Umrichterzweigen und der Regler 59 der Regelung des Gesamtenergieinhalts des Direktumrichters 20 dient. Die Regler 56, 58, 59 können z.B. als PI-Regler ausgebildet sein. Den Reglern 56, 58, 59 werden zusätzlich Sollgrößen 55 zugeführt, z.B. der vorgegebene Sollbereich des Energieinhalts, auf den geregelt werden soll. Die Sollgrößen können für die einzelnen Regler 56, 58, 59 unterschiedlich sein. Durch unterschiedliche Wahl der Reglerparameter, d.h. zum Beispiel P-Anteil und I-Anteil, für die oberen vier Regler 56 einerseits und jeweils für den Regler 58 und 59 andererseits kann den unterschiedlichen Dynamiken im Auftreten von Abweichungen des Energieinhalt-Istwerts von seinem Sollwert Rechnung getragen werden. Folglich ist eine solche Anordnung der Regler 56 nach dem Block 53 gegenüber einer Anordnung vor dem Block 53 vorteilhaft. Hierbei dient der Regler 58 dazu, die Energieverschiebung zwischen benachbarten Umrichterzweigen für den jeweils gewählten Arbeitspunkt auszuregeln. Der Regler 59 dient dazu, den Gesamtenergieinhalt im gewählten Arbeitspunkt des Umrichters zu regeln.

Die Ausgangsgrößen der Regler 56 werden jeweiligen Bereichsanpassungsblöcken 57 zugeführt. In den Bereichsanpassungsblöcken 57 werden die zugeführten Größen mit den jeweiligen festen, nicht veränderlichen Größen der Regelung multipliziert bzw. dividiert. Bei der beschriebenen Kreisstromregelung sind z.B. die Spannungen $\hat{v}_{g1}$ und $\hat{v}_{g2}$ feste Werte, die nicht geregelt werden sollen. Um diese werden die zu regelnden Kreisstromanteile $\hat{i}_{cir,1,1}$, $\hat{i}_{cir,1,2}$, $\hat{i}_{cir,2,1}$ und $\hat{i}_{cir,2,2}$ in den oberen vier Bereichsanpassungsblöcken 57 bereinigt. In dem Block 70 werden die Gleichgrößen $I_{cir}$ und $V_{star}$ erzeugt und ausgegeben. Über die Bereichsanpassung im Block 71 wird ein Sollwert für einen Wirkleistungsstrom im zweiten Dreileitungsnetz 31 bestimmt. In einer vorteilhaften Ausgestaltung ist dem Block 70 ein Vorsteuerungsblock 60 vorgeschaltet. Dem Block 70 ist ein Vorsteuerungsblock 61 vorgeschaltet. Über die Vorsteuerungsblöcke 60, 61 kann der Regelung durch die Regler 58, 59 eine schnelle Anpassung an geänderte Bedingungen, wie z. B. Sollwertsprünge im Energieversorgungsbedarf, überlagert werden. Dies hat den Vorteil, dass die Regler 58, 59 bezüglich ihrer Reglerparameter auf eine optimale Regelung unter stationären Bedingungen ausgelegt werden können und dennoch schnell auf Sollwert-Änderungen größeren Ausmaßes reagiert werden kann.

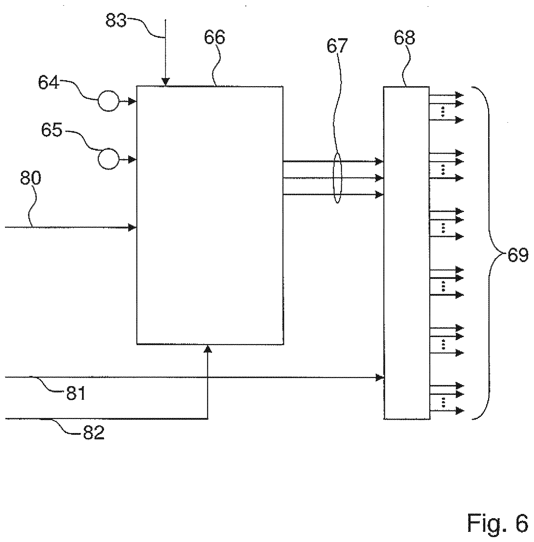

Die aus den oberen vier Blöcken 57 kommenden Kreisströme werden in Modulationsblöcken 62 mit dem jeweiligen Wechselsignal moduliert. Die aus den Blöcken 62, 70 kommenden Größen werden im Block 63 addiert, wodurch sich als Ausgangsgröße 80 der einzuregelnde Kreisstrom $i_{cir,Soll}$ ergibt. Dem Block 63 wird zudem der im Block 70 bestimmte Kreisstrom-Gleichanteil $I_{cir}$ zugeführt. Aus dem Block 70 kommt zudem als Ausgangsgröße 81 der Gleichanteil der Sternpunktdifferenzspannung $V_{star}$. Vom Block 71 wird als Ausgangsgröße 82 ein Sollwert des Wirkleistungsstroms abgegeben. Die Figur 6 zeigt die weiteren Teile des Reglers, dem die zuvor erläuterten Ausgangsgrößen 80, 81, 82 zugeführt werden. Der einzuregelnde Kreisstrom 80 wird einem Stromregler 66 zugeführt. Dem Stromregler 66 werden zudem der Sollwert des Wirkstroms 82, die gemessenen Istströme 83 sowie weitere Sollwerte 64, 65, wie z. B. die Sollströme im ersten Dreileitungsnetz 1 und der Sollwert der Blindströme im zweiten Dreileitungsnetz 31 zugeführt. Hieraus erzeugt der Stromregler 66 Ausgangssignale 67, die die Sollspannungen in den Umrichterzweigen charakterisieren. Die Sollspannungen 67 werden einer Umrichtersteuerung 68 zugeführt. Der Umrichtersteuerung 68 wird zudem der Gleichanteil der Sternpunktdifferenzspannung $V_{star}$ zugeführt.

Die Umrichtersteuerung 68 steuert die Aufteilung auf die einzelnen Umrichterzweige 32, 33, 34, 35, 36, 37 bzw. die lokalen Steuereinheiten 12. Die Umrichtersteuerung 68 dient zur Verteilung der zugeführten Eingangsgröße, d.h. der in einem Umrichterzweig einzuprägenden Spannung, auf die einzelnen Brückenmodule des Umrichterzweigs. Hierfür können bereits bekannte Verfahren verwendet werden. So kann z.B. abhängig von der Stromflussrichtung im betrachteten Zweig zuerst eine Aktivierung des Brückenmoduls mit der kleinsten bzw. mit der höchsten Zwischenkreisspannung erfolgen. Ein weiteres vorteilhaftes Verfahren ist beschrieben in der Veröffentlichung von M. Dong, B. Wu, N. Zargari, and J. Rodriguez, "A novel digital modulation scheme for multilevel cascaded h-bridge inverters," in Power Electronics Specialists Conference, 2008. PESC 2008. IEEE, 2008, pp. 1675 -1680.. Aus der Umrichtersteuerung 68 werden den einzelnen lokalen Steuereinheiten 12 Steuerungsdaten 69 zugeführt.

Analog zum Einsatz netzfrequenter Komponenten im Kreisstrom ist auch eine Energieinhaltsregelung über netzfrequente Komponenten in der Sternpunktdifferenzspannung möglich. Hierfür kann ebenfalls die anhand der Figur 5 beschriebene Reglerstruktur eingesetzt werden, wobei in diesem Fall gilt:

$$i_{cir}(t) = I_{cir} \tag{19}$$

$$v_{star}(t) = V_{star} + \hat{v}_{star,1,1} \cdot \cos(\omega_1 t - \varphi_1) + \hat{v}_{star,1,2} \cdot \cos\left(\omega_1 t - \varphi_1 - \frac{2\pi}{3}\right)$$

$$+ \hat{v}_{star,2,1} \cdot \cos\left(\omega_2 t + \psi - \varphi_2 + \frac{\pi}{3}\right) + \hat{v}_{star,2,2} \cdot \cos\left(\omega_2 t + \psi - \varphi_2 - \frac{\pi}{3}\right)$$

$$(20)$$

$$
\begin{pmatrix} \overline{P}_{z1} \\ \overline{P}_{z2} \\ \overline{P}_{z3} \\ \overline{P}_{z4} \\ \overline{P}_{z5} \\ \overline{P}_{z6} \end{pmatrix} = \underbrace{\begin{pmatrix} -0{,}25 & 0{,}25 & 0 & 0{,}25 & 1 & 1 \\ 0{,}25 & -0{,}25 & 0{,}25 & 0 & -1 & 1 \\ 0 & -0{,}25 & -0{,}25 & 0 & 1 & 1 \\ 0 & 0{,}25 & -0{,}25 & 0{,}25 & -1 & 1 \\ 0{,}25 & 0 & 0{,}25 & -0{,}25 & 1 & 1 \\ -0{,}25 & 0 & 0 & -0{,}25 & -1 & 1 \end{pmatrix}}_{A_{star}} \begin{pmatrix} \hat{v}_{star,1,1} \cdot \hat{i}_{g1} \\ \hat{v}_{star,1,2} \cdot \hat{i}_{g1} \\ \hat{v}_{star,2,1} \cdot \hat{i}_{g2} \\ \hat{v}_{star,2,2} \cdot \hat{i}_{g2} \\ \frac{\sqrt{3}}{18}(Q_2 - Q_1) + V_{star} \cdot I_{cir} \\ -P_1 - P_2 \end{pmatrix}
$$

$$(21)$$

Wie $A_{cir}$ ist auch $A_{star}$ invertierbar. Beide Verfahren lassen sich auch kombiniert einsetzen.

Es sei darauf hingewiesen, dass die verwendeten Phasenverschiebungen zwischen den einzelnen Komponenten der Sternpunktdifferenzspannung bzw. des Kreisstroms nur Beispiele sind; hier je Drehstromsystem zwei beliebige, voneinander verschiedene Verschiebungswinkel zum Einsatz kommen. Es resultieren dann andere Matrizen $A_{star}$ bzw. $A_{cir}$, die jedoch genauso invertierbar und zur Regelung nutzbar sind wie die hier angegebenen.

Beim Betrieb der zwei Dreileitungsnetze mit identischen Netzfrequenzen lässt sich grundsätzlich die gleiche anhand der Figuren 4 und 5 beschriebene Regelung einsetzen, wobei Folgendes zu berücksichtigen ist. Im Gegensatz zum Betrieb beider Dreileitungsnetze mit unterschiedlichen Frequenzen beeinflussen sich bei $\omega_1 = \omega_2$ die Netzspannungen - bzw. Netzströme - gegenseitig, so dass es zu vom Differenzwinkel $\psi$ abhängigen mittleren Leistungen in den einzelnen Zweigen kommt. Wie im zuvor betrachteten Fall unterschiedlicher Frequenzen kommt es auch hier nur zu einer einzigen Verschiebungsleistung $P_s$, die mit alternierendem Vorzeichen in benachbarten Zweigen auftritt. Mit

$$\mu = \frac{\hat{v}_{g2}}{\hat{v}_{g1}}$$

als Abkürzung beträgt die Verschiebungsleistung $P_s$

$$P_s = -\frac{\sqrt{3}}{18}(Q_1 - Q_2) + \frac{\sqrt{3}}{9}\left[\frac{Q_2}{\mu} - Q_1\mu\right]\cos\left(\psi - \frac{2\pi}{3}\right) + \frac{\sqrt{3}}{9}\left[\frac{P_2}{\mu} + P_1\mu\right]\cos\left(\psi - \frac{\pi}{6}\right). \qquad (22)$$

Für den Fall $P_2 = -P_1$ kann die Verschiebungsleistung $P_s$ abhängig vom Lastwinkel durch Wahl der Blindleistung im speisenden Dreileitungsnetz 30 kompensiert werden durch

$$Q_1 = \frac{(\mu^2 - 1)P_2 \sin\left(\psi + \frac{\pi}{3}\right) + Q_2 \cos\left(\psi + \frac{\pi}{3}\right) - \frac{\pi}{2}Q_2}{\mu^2 \cos\left(\psi + \frac{\pi}{3}\right) - \frac{\pi}{2}}. \qquad (23)$$

Da die Gleichung (23) zwei Polstellen aufweist, kommt es zu Einschränkungen des Wertebereichs der Regelung. Die Kompensation der Verschiebungsleistung über den Kreisstrom und die Sternpunktspannung hingegen funktioniert Betriebspunktunabhängig bei entsprechender Umrichterdimensionierung in einem durchgehenden Wertebereich. Es gilt in diesem Fall:

$$I_{cir}V_{star} = \frac{\sqrt{3}}{18}(Q_1 - Q_2) - \frac{\sqrt{3}}{9}\left[\frac{Q_2}{\mu} - Q_1\mu\right]\cos\left(\psi - \frac{\pi}{3}\right) - \frac{\sqrt{3}}{9}\left[\frac{P_2}{\mu} + P_1\mu\right]\cos\left(\psi - \frac{\pi}{6}\right), \qquad (24)$$

bzw. bei Verwendung von Wechselgrößen

$$\hat{i}_{cir}\hat{v}_{star} = \frac{\sqrt{3}}{9}(Q_1 - Q_2) - \frac{2\sqrt{3}}{9}\left[\frac{Q_2}{\mu} - Q_1\mu\right]\cos\left(\psi - \frac{\pi}{3}\right) - \frac{2\sqrt{3}}{9}\left[\frac{P_2}{\mu} + P_1\mu\right]\cos\left(\psi - \frac{\pi}{6}\right). \qquad (25)$$

Die in Figur 5 dargestellten Blöcke 51, 53, 56, 57, 58 können in Form von Hardware- oder Software-Modulen realisiert werden, auch kombiniert miteinander.

**Patentansprüche**

1. Verfahren zur Steuerung eines Direktumrichters (20), der zur Verbindung eines ersten Dreileitungsnetzes (30) mit einem zweiten Dreileitungsnetz (31) eingerichtet ist, wobei der Direktumrichter (20) sechs in Reihe geschaltete Umrichterzweige (32, 33, 34, 35, 36, 37) aufweist, in denen elektrische Energiespeicher (9, 11) vorgesehen sind, wobei der Umrichterzweig (32, 33, 34, 35, 36, 37) ein einzelnes Brückenmodul (1) oder eine Reihenschaltung von mehreren Brückenmodulen (1) umfasst, wobei das Brückenmodul (1) genau zwei Anschlüsse (2,3) zur Verbindung mit einer Leitung des Dreileitungsnetzes (30,31) oder einem Anschluss eines weiteren Brückenmoduls (1) aufweist, wobei das Verfahren ein Verfahren zur Umrichterbetriebssteuerung (41) aufweist, mit dem der Energietransfer von dem ersten Dreileitungsnetz (30) in das zweite Dreileitungsnetz (31) oder umgekehrt nach Energiebedarfs-, Energieangebots und/oder Blindleistungskriterien gesteuert wird, wobei das Verfahren ein Verfahren zur Energieinhaltsregelung (42) aufweist, mit dem die in jedem Umrichterzweig (32, 33, 34, 35, 36, 37) gespeicherte jeweilige elektrische Energiemenge oder eine die elektrische Energiemenge kennzeichnende elektrische Größe auf einen vorgegebenen Sollbereich geregelt wird, wobei das Verfahren zur Energieinhaltsregelung (42) einen Kreisstrom ($i_{cir}$),der durch die gesamte Reihenschaltung der sechs Umrichterzweige (32, 33, 34, 35, 36, 37) kreisförmig fließt, und/oder eine Sternpunktdifferenzspannung ($V_{star}$), die zwischen den Sternpunkten (303, 313) des ersten und des zweiten Dreileitungsnetzes (30, 31) auftritt, steuert.

2. Verfahren nach Anspruch 1, **dadurch gekennzeichnet, dass** das Verfahren zur Energieinhaltsregelung (42) die vom Direktumrichter (20) in dem ersten Dreileitungsnetz (30) und/oder dem zweiten Dreileitungsnetz (31) erzeugte Blindleistung ($Q_1$, $Q_2$) steuert.

3. Verfahren nach einem der vorhergehenden Ansprüche, **dadurch gekennzeichnet, dass** das Verfahren zur Energieinhaltsregelung (42) einen Kreisstrom ($i_{cir}$),der durch die gesamte Reihenschaltung der sechs Umrichterzweige (32, 33, 34, 35, 36, 37) kreisförmig fließt, und/oder eine Sternpunktdifferenzspannung ($V_{star}$), die zwischen den Sternpunkten (303, 313) des ersten und des zweiten Dreileitungsnetzes (30, 31) auftritt, steuert.

4. Verfahren nach einem der vorhergehenden Ansprüche, **dadurch gekennzeichnet, dass** die Sternpunktdifferenzspannung ($V_{star}$) als Gleichspannung eingeprägt wird und der Kreisstrom ($i_{cir}$) als Gleichstrom eingeprägt wird.

5. Verfahren nach einem der vorhergehenden Ansprüche, **dadurch gekennzeichnet, dass** ein Kreisstrom ($i_{cir}$) und eine Sternpunktdifferenzspannung ($V_{star}$) eingeprägt werden, die gleich- oder gegenphasig und gleichfrequent zueinander sind, wobei die Frequenz unterschiedlich zu den beiden Frequenzen ($\omega 1$, $\omega 2$} des ersten und des zweiten Dreileitungsnetzes (30, 31) ist.

6. Verfahren nach einem nach einem der vorhergehenden Ansprüche, **dadurch gekennzeichnet, dass** dem vorhandenen Kreisstrom ($i_{cir}$) Stromanteile in der Netzfrequenz ($\omega 1$) des ersten Dreileitungsnetzes (30) und/oder Stromanteile in der Netzfrequenz ($\omega 2$) des zweiten Dreileitungsnetzes (31} überlagert werden.

**7.** Verfahren nach einem der vorhergehenden Ansprüche, **dadurch gekennzeichnet, dass** der vorhandenen Sternpunktdifferenzspannung ($V_{star}$) Spannungsanteile in der Netzfrequenz ($\omega1$) des ersten Dreileitungsnetzes (30) und/oder Spannungsanteile in der Netzfrequenz ($\omega2$) des zweiten Dreileitungsnetzes (31) überlagert werden.

**8.** Verfahren nach einem der vorhergehenden Ansprüche, **dadurch gekennzeichnet, dass**

a) dem vorhandenen Kreisstrom ($i_{cir}$) Stromanteile in der Netzfrequenz ($\omega1$) des ersten Dreileitungsnetzes (30) und/oder Stromanteile in der Netzfrequenz ($\omega2$) des zweiten Dreileitungsnetzes (31) überlagert werden und

b) der vorhandenen Sternpunktdifferenzspannung ($V_{star}$) Spannungsanteile in der Netzfrequenz ($\omega1$) des ersten Dreileitungsnetzes (30) und/oder Spannungsanteile in der Netzfrequenz ($\omega2$) des zweiten Dreileitungsnetzes (31) überlagert werden.

**9.** Verfahren nach einem der vorhergehenden Ansprüche, **dadurch gekennzeichnet, dass** mehrere Regler (56, 58, 59) zur Regelung verschiedener Regelgrößen des Direktumrichters (20) vorhanden sind und in einem Regler (59) der Gesamtenergieinhalt des Direktumrichters (20) im jeweiligen Arbeitspunkt geregelt wird.

**10.** Verfahren nach einem der vorhergehenden Ansprüche, **dadurch gekennzeichnet, dass** mehrere Regler (56, 58, 59) zur Regelung verschiedener Regelgrößen des Direktumrichters (20) vorhanden sind und in einem Regler (58) die Energieverschiebung zwischen benachbarten Umrichterzweigen (32, 33, 34, 35, 36, 37) geregelt wird.

**11.** Verfahren nach einem der vorhergehenden Ansprüche, **dadurch gekennzeichnet, dass** mehrere Regler (56, 58, 59) zur Regelung verschiedener Regelgrößen des Direktumrichters (20) vorhanden sind und in vier Reglern (56) die Energiebalance zwischen nicht ausschließlich benachbarten Umrichterzweigen (32, 33, 34, 35, 36, 37) geregelt wird.

**12.** Elektronische Steuerungseinrichtung (40) für einen Direktumrichter (20), die eingerichtet ist zur Ausführung eines Verfahrens nach einem der vorhergehenden Ansprüche.

**13.** Direktumrichter (20) mit einer Steuerungseinrichtung (40) dafür nach Anspruch 12.

**14.** Computerprogramm mit Programmcodemitaeln eingerichtet zur Durchführung des Verfahrens nach einem der Ansprüche 1 bis 11, wenn das Computerprogramm auf einem Rechner ausgeführt wird.

**15.** Computerprogramm nach Anspruch 14, wobei die Programmcodemittel auf einem maschinenlesbaren Träger gespeichert sind.

**Claims**

**1.** Method for controlling a cycloconverter (20), which is configured for connecting a first three-line network (30) to a second three-line network (31), wherein the cycloconverter (20) has six converter branches (32, 33, 34, 35, 36, 37) connected in series, in which electrical energy converters (9, 11) are provided, wherein the converter branch (32, 33, 34, 35, 36, 37) comprises a single bridge module (1) or a series circuit of a plurality of bridge modules (1), wherein the bridge module (1) has precisely two terminals (2, 3) for connection to a line of the three-line network (30, 31) or to a terminal of a further bridge module (1), wherein the method has a method for converter operational control (41), with which the energy transfer from the first three-line network (30) into the second three-line network (31) or vice versa can be controlled in accordance with energy demand, energy supply and/or reactive power criteria, wherein the method comprises a method for energy content regulation (42) with which the respective amount of electrical energy stored in each converter branch (32, 33, 34, 35, 36, 37) or an electrical variable identifying the amount of electrical energy is to be regulated to a predetermined setpoint range, wherein the method for energy content regulation (42) controls a circulating current ($I_{cir}$) which flows in a circuit through the entire series circuit of the six converter branches (32, 33, 34, 35, 36, 37) and/or a star point displacement voltage ($V_{star}$) which occurs between the displacement points (303, 313) of the first and the second three-line network (30, 31).

**2.** Method according to claim 1, **characterised in that** the method for energy content regulation (42) controls the reactive power ($Q_1$, $Q_2$) created by the cycloconverter (20) in the first three-line network (30) and/or in the second three-line network (31) .

**3.** Method according to one of the preceding claims, **characterised in that** the method for energy content regulation (42) controls a circulating current ($I_{cir}$) which flows in a circuit through the entire series circuit of the six converter branches (32, 33, 34, 35, 36, 37) and/or a star point displacement voltage ($V_{star}$) which occurs between the displacement points (303, 313) of the first and the second three-line network (30, 31).

**4.** Method according to one of the preceding claims, **characterised in that** the star point displacement voltage ($V_{star}$) is injected as a DC voltage and the circulating current ($I_{cir}$) as a direct current.

**5.** Method according to one of the preceding claims, **characterised in that** a circulating current ($I_{cir}$) and a star point displacement voltage ($V_{star}$) are injected, which are in-phase or out-of-phase and have the same frequency in relation to one another, wherein the frequency is different from the two frequencies ($\omega_1$, $\omega_2$) of the first and the second three-line network (30, 31).

**6.** Method according to one of the preceding claims, **characterised in that** the existing circulating current ($I_{cir}$) is overlaid with current components in the network frequency ($\omega_1$) of the first three-line network (30) and/or current components in the network frequency ($\omega_2$) of the second three-line network (31).

**7.** Method according to one of the preceding claims, **characterised in that** the existing star-point displacement voltage ($V_{star}$) is overlaid with voltage components in the network frequency ($\omega_1$) of the first three-line network (30) and/or voltage components in the network frequency ($\omega_2$) of the second three-line network (31).

**8.** Method according to one of the preceding claims, **characterised in that**

a) the existing circulating current ($I_{cir}$) is overlaid with current components in the network frequency ($\omega_1$) of the first three-line network (30) and/or current components in the network frequency ($\omega_2$) of the second three-line network (31)
and
b) the existing star-point displacement voltage ($V_{star}$) is overlaid with voltage components in the network frequency ($\omega_1$) of the first three-line network (30) and/or voltage components in the network frequency ($\omega_2$) of the second three-line network (31).

**9.** Method according to one of the preceding claims, **characterised in that** a number of regulators (56, 58, 59) for regulating different regulation variables of the cycloconverter (20) are present and in one regulator (59) the overall energy content of the cycloconverter (20) in the respective operating point is regulated.

**10.** Method according to one of the preceding claims, **characterised in that** a number of regulators (56, 58, 59) for regulating different regulation variables of the cycloconverter (20) are present and in one regulator (58) the energy displacement between neighbouring converter branches (32, 33, 34, 35, 36, 37) is regulated.

**11.** Method according to one of the preceding claims, **characterised in that** a number of regulators (56, 58, 59) for regulating different regulation variables of the cycloconverter (20) are present and in four regulators (56) the energy balance between not exclusively neighbouring converter branches (32, 33, 34, 35, 36, 37) is regulated.

**12.** Electronic control device (40) for a cycloconverter (20) which is configured for carrying out a method according to one of the preceding claims.

**13.** Cycloconverter (20) with a control device (40) for said converter, according to claim 12.

**14.** Computer program with program code means configured for carrying out the method according to one of claims 1 to 11, when the computer program is executed on a processor.

**15.** Computer program according to claim 14, wherein the program code means are stored on a machine-readable carrier.

**Revendications**

**1.** Procédé de commande d'un convertisseur (20) direct, qui est conçu pour relier un premier réseau (30) à trois lignes à un deuxième réseau (31) à trois lignes, le convertisseur (20) direct ayant six branches (32, 33, 34, 35, 36, 37) de convertisseur montées en série, dans lesquelles il est prévu des accumulateurs (9, 11) d'énergie électrique, la branche (32, 33, 34, 35, 36, 37) du convertisseur comprenant un module (1) de pont individuel ou un circuit série de plusieurs modules (1) de pont, le module (1) de pont ayant exactement deux bornes (2, 3) de liaison à une ligne du réseau (30, 31) à trois lignes ou à une borne d'un autre module (1) de pont, le procédé comportant un procédé de commande (41) de fonctionnement du convertisseur, par lequel on commande le transfert d'énergie du premier réseau (30) à trois lignes au deuxième réseau (31) à trois lignes ou inversement, suivant le besoin en énergie, l'offre d'énergie et/ou des critères de puissance réactive, le procédé comportant un procédé de régulation (42) du contenu énergétique, par lequel la quantité d'énergie électrique respective emmagasinée dans chaque branche (32, 33, 34, 35, 36, 37) du convertisseur ou une grandeur électrique caractérisant la quantité d'énergie électrique est régulée sur une plage de consigne donnée à l'avance, le procédé de régulation (42) du contenu énergétique commandant un courant ($i_{cir}$) circulaire, qui passe dans tout le circuit série des six branches (32, 33, 34, 35, 36, 37) du convertisseur et/ou une tension ($V_{star}$) de différence de point neutre qui apparaît entre les points (303, 313) neutres du premier et du deuxième réseau (30, 31) à trois lignes.

2. Procédé suivant la revendication 1, **caractérisé en ce que** le procédé de régulation (42) du contenu énergétique commande la puissance ($Q_1$, $Q_2$) réactive produite par le convertisseur (20) direct dans le premier réseau (30) à trois lignes et/ou le deuxième réseau (31) à trois lignes.

3. Procédé suivant l'une des revendications précédentes, **caractérisé en ce que** le procédé de régulation (42) du contenu énergétique commande un courant ($i_{cir}$) circulaire, qui passe en forme de cercle dans tout le circuit série des six branches (32, 33, 34, 35, 36, 37) du convertisseur et/ou une tension ($V_{star}$) de différence de point neutre, qui apparaît entre les points (303, 313) neutres du premier et du deuxième réseau (30, 31) à trois lignes.

4. Procédé suivant l'une des revendications précédentes, **caractérisé en ce que** l'on applique la tension ($V_{star}$) de différence de point neutre sous la forme d'une tension continue et on injecte le courant ($i_{cir}$) circulaire sous la forme d'un courant continu.

5. Procédé suivant l'une des revendications précédentes, **caractérisé en ce que** l'on injecte le courant ($i_{cir}$) circulaire et on applique une tension ($V_{star}$) de différence de point neutre, qui sont en phase ou en opposition de phase et à la même fréquence, la fréquence étant différente par rapport aux deux fréquences ($\omega1$, $\omega2$) du premier et du deuxième réseau (30, 31) à trois lignes.

6. Procédé suivant l'une des revendications précédentes, **caractérisé en ce que** l'on superpose, au courant ($i_{cir}$) circulaire présent, des proportions de courant à la fréquence ($\omega1$) du premier réseau (30) à trois lignes et/ou des proportions de courant à la fréquence ($\omega2$) du deuxième réseau (31) à trois lignes.

7. Procédé suivant l'une des revendications précédentes, **caractérisé en ce que** l'on superpose, à la tension ($V_{star}$) de différence de point neutre présente, des proportions de tension à la fréquence ($\omega1$) du premier réseau (30) à trois lignes et/ou des proportions de tension à la fréquence ($\omega2$) du deuxième réseau (31) à trois lignes.

8. Procédé suivant l'une des revendications précédentes, **caractérisé en ce que**

   a) on superpose, au courant ($i_{cir}$) circulaire présent, des proportions de courant à la fréquence ($\omega1$) du premier réseau (30) à trois lignes et/ou des proportions de courant à la fréquence ($\omega2$) du deuxième réseau (31) à trois lignes
   et
   b) on superpose à la tension ($V_{star}$) de différence de point neutre présente, des proportions de tension à la fréquence ($\omega1$) du premier réseau (30) à trois lignes et/ou des proportions de courant à la fréquence ($\omega2$) du deuxième réseau (31) à trois lignes.

9. Procédé suivant l'une des revendications précédentes, **caractérisé en ce qu'**il y a plusieurs régleurs (56, 58, 59) de régulation de diverses grandeurs de réglage du convertisseur (20) direct et on régule dans un régleur (59) le contenu énergétique global du convertisseur (20) direct aux points de travail respectif.

10. Procédé suivant l'une des revendications précédentes, **caractérisé en ce qu'**il y a plusieurs régleurs (56, 58, 59) de régulation de diverses grandeurs de réglage du convertisseur (20) direct et on régule dans un régleur (58) le décalage énergétique entre des branches (32, 33, 34, 35, 36, 37) voisines du convertisseur.

**11.** Procédé suivant l'une des revendications précédentes, **caractérisé en ce qu'**il y a plusieurs régleurs (56, 58, 59) de régulation de diverses grandeurs de réglage du convertisseur (20) direct et on régule dans quatre régleurs (56) l'équilibre énergétique entre des branches (32, 33, 34, 35, 36, 37) du convertisseur, qui ne sont pas exclusivement voisines.

**12.** Dispositif (40) électronique de commande d'un convertisseur (20) direct, qui est conçu pour effectuer un procédé suivant l'une des revendications précédentes.

**13.** Convertisseur (20) direct ayant un dispositif (40) de commande suivant la revendication 12.

**14.** Programme d'ordinateur ayant des moyens de code de programme conçu pour effectuer le procédé suivant l'une des revendications 1 à 11, lorsque le programme d'ordinateur est exécuté sur un ordinateur.

**15.** Programme d'ordinateur suivant la revendication 14, dans lequel les moyens de code de programme sont mémorisés sur un support déchiffrable par ordinateur.

$u_{mod}$

Fig. 1

Fig. 2

EP 2 710 722 B1

Fig. 3

Fig. 4

Fig. 5

25

Fig. 6

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010013862
- EP 2553799 A0
- WO 2011120679 A

**In der Beschreibung aufgeführte Nicht-Patentliteratur**

- **VON M. GLINKA ; R. MARQUARDT.** A new AC/AC Converter Familiy Applied to a Single-Phase Converter. *The 5th international Conference on Power Electronics and Drive Systems,* 2003, vol. 1, 16-23
- Synthesis of Multilevel Converters Based on Single- and/or Three-Phase Converter Building Blocks. **VON J. WEN ; K. MA SMEDLEY.** IEEE Transactions on Power Electronics. IEEE Service Center, Mai 2008, vol. 23, 1247-1256
- A novel digital modulation scheme for multilevel cascaded h-bridge inverters. **VON M. DONG ; B. WU ; N. ZARGARI ; J. RODRIGUEZ.** Power Electronics Specialists Conference. IEEE, 2008, 1675-1680